(19) Europäisches Patentamt
European Patent Office
Office européen des brevets

(11) **EP 4 148 628 B1**

(12) **EUROPEAN PATENT SPECIFICATION**

(45) Date of publication and mention
of the grant of the patent:
**29.01.2025 Bulletin 2025/05**

(21) Application number: **22175119.1**

(22) Date of filing: **24.05.2022**

(51) International Patent Classification (IPC):
*G06F 17/11* (2006.01)    *G06N 3/047* (2023.01)
*G06N 5/01* (2023.01)    *G06N 3/092* (2023.01)
*G06N 3/098* (2023.01)    *G06N 7/01* (2023.01)

(52) Cooperative Patent Classification (CPC):
**G06N 5/01; G06F 17/11; G06N 3/047; G06N 3/092;
G06N 3/098;** G06N 7/01; Y02D 10/00

(54) **DATA PROCESSING APPARATUS, DATA PROCESSING METHOD, AND DATA PROCESSING PROGRAM**

DATENVERARBEITUNGSVORRICHTUNG, DATENVERARBEITUNGSVERFAHREN UND
DATENVERARBEITUNGSPROGRAMM

APPAREIL DE TRAITEMENT DES DONNÉES, PROCÉDÉ DE TRAITEMENT DES DONNÉES ET
PROGRAMME DE TRAITEMENT DES DONNÉES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **13.09.2021 JP 2021148257**

(43) Date of publication of application:
**15.03.2023 Bulletin 2023/11**

(73) Proprietor: **FUJITSU LIMITED
Kawasaki-shi, Kanagawa 211-8588 (JP)**

(72) Inventor: **Watanabe, Yasuhiro
Kawasaki-shi, Kanagawa 211-8588 (JP)**

(74) Representative: **Hoffmann Eitle
Patent- und Rechtsanwälte PartmbB
Arabellastraße 30
81925 München (DE)**

(56) References cited:
**JP-A- 2007 102 333     US-A1- 2021 049 475
US-A1- 2021 150 356     US-A1- 2021 256 090**

**Description**

FIELD

The embodiments discussed herein are related to a data processing apparatus, a data processing method, and a data processing program.

BACKGROUND

An information processing device may be used to solve a combinatorial optimization problem. The information processing device converts the combinatorial optimization problem into an energy function of an Ising model, which is a model representing behaviors of spins in a magnetic body, and searches for a combination that minimizes a value of the energy function among combinations of values of state variables included in the energy function. The combination of the values of the state variables that minimizes the value of the energy function corresponds to a ground state or an optimal solution represented by a set of the state variables. Examples of a method for obtaining an approximate solution of the combinatorial optimization problem in a practical time include a simulated annealing (SA) method and a replica exchange method based on a Markov-Chain Monte Carlo (MCMC) method.

For example, an information processing device including a plurality of Ising devices has been proposed. In this proposal, the Ising device includes a plurality of neuron circuits, each of which performs processing on one bit. Each of the plurality of Ising devices reflects neuron states of another Ising device obtained via a router on its own neuron circuits.

Furthermore, an optimization device that solves a combinatorial optimization problem by dividing the combinatorial optimization problem into a plurality of partial problems, and obtains a solution to the whole problem on the basis of solutions to the partial problems has also been proposed.

Japanese Laid-open Patent Publication No. 2017-219948 and Japanese Laid-open Patent Publication No. 2021-5282 are disclosed as related art.

US 2021/049475 A1 relates to an optimization device and a control method of the optimization device.

US 2021/150356 A1 relates to an optimization device, a method for controlling the optimization device and a program for controlling the optimization device.

US 2007/079076 A1 relates to a data processing apparatus and a data processing method, having a data memory access function, for performing pipeline processing based on RISC (Reduced Instruction Set Computer) architecture.

US 2021/256090 A1 relates an optimization apparatus including: Ising machines that each search for a solution of a subproblem among subproblems obtained by dividing a problem represented by an Ising model, each of the Ising machines including: a memory configured to store values of a state variable set corresponding to a subproblem to be calculated for a plurality of groups; a processor configured to: perform processing of calculating a second solution candidate for each of the plurality of groups based on first solution candidates of subproblems calculated by other Ising machines by changing a group to be processed for every unit period such that the second solution candidate is calculated for the state variable set of a group different from groups processed by the other Ising machines in a same unit period; and a communication circuit configured to transmit the second solution candidate to the other Ising machines every time the unit period ends.

SUMMARY

[TECHNICAL PROBLEM]

It is conceivable to efficiently perform solution by increasing a degree of parallelism of solution search processing for a problem by using resources of an arithmetic unit included in a device. Here, in a principle of minimizing an Ising-type energy function by the MCMC method, sequential processing of sequentially updating state variables one by one for the problem is a principle. Thus, even when the degree of parallelism of the search processing is increased, it is not possible to obtain an appropriate solution to the problem unless the principle of sequential processing in the MCMC method is observed.

In one aspect, it is an object of an embodiment to provide a data processing apparatus, a data processing method, and a program that effectively utilize arithmetic resources.

[SOLUTION TO PROBLEM]

The present invention is defined by independent claims. Further examples are provided for facilitating the understanding of the invention.

[ADVANTAGEOUS EFFECTS OF INVENTION]

In one aspect, arithmetic resources may be utilized effectively.

BRIEF DESCRIPTION OF DRAWINGS

FIG. 1 is a diagram for describing a data processing apparatus of a first embodiment;
FIG. 2 is a diagram illustrating a hardware example of a data processing apparatus of a second embodiment;
FIG. 3 is a diagram illustrating a functional example of the data processing apparatus;
FIG. 4 is a diagram illustrating a functional example of local field update in a group;
FIG. 5 is a diagram illustrating an example of pipeline processing;
FIG. 6 is a diagram illustrating an example of reading out weighting coefficients;
FIG. 7A and FIG. 7B are flowcharts illustrating a processing example of the data processing apparatus;
FIG. 8 is a diagram illustrating an example of pipeline processing of a third embodiment;
FIG. 9 is a diagram illustrating an example of a memory configuration for storing weighting coefficients;
FIG. 10 is a diagram illustrating an example of a weighting coefficient storage memory unit; and
FIG. 11 is a diagram illustrating a functional example of stall control of a data processing apparatus.

DESCRIPTION OF EMBODIMENTS

Hereinafter, present embodiments will be described with reference to the drawings.

[First Embodiment]

A first embodiment will be described.

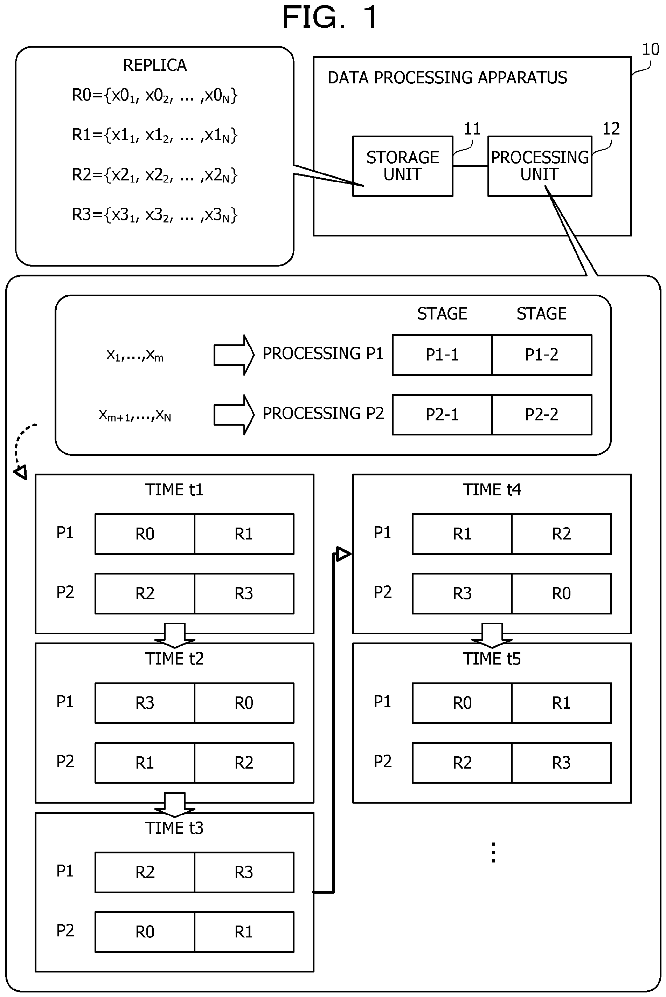

FIG. 1 is a diagram for describing a data processing apparatus of the first embodiment.
A data processing apparatus 10 searches for a solution to a combinatorial optimization problem by using a Markov-Chain Monte Carlo (MCMC) method, and outputs the searched solution. For example, the data processing apparatus 10 uses a simulated annealing (SA) method, a parallel tempering (PT) method, and the like based on the MCMC method to solution search. The PT method is also called a replica exchange method. The data processing apparatus 10 includes a storage unit 11 and a processing unit 12.
The storage unit 11 may be a volatile storage device such as a random access memory (RAM), or may be a nonvolatile storage device such as a flash memory. The storage unit 11 may include an electronic circuit such as a register. The processing unit 12 may be an electronic circuit such as a central processing unit (CPU), a digital signal processor (DSP), an application specific integrated circuit (ASIC), a field programmable gate array (FPGA), and a graphics processing unit (GPU). The processing unit 12 may be a processor that executes a program. The "processor" may include a set of a plurality of processors (multiprocessor).
The combinatorial optimization problem is formulated by an Ising-type energy function, and is replaced with a problem that minimizes a value of an energy function, for example. The energy function may be called an objective function, an evaluation function, or the like. The energy function includes a plurality of state variables. The state variable is a binary variable that takes a value of 0 or 1. The state variable is expressed as a bit. A solution to the combinatorial optimization problem is represented by values of a plurality of state variables. A solution that minimizes a value of the energy function represents a ground state of an Ising model and corresponds to an optimal solution to the combinatorial optimization problem. The value of the energy function is expressed as energy.
The Ising-type energy function is represented by Expression (1).
[Expression 1]

$$E(\boldsymbol{x}) = -\sum_{\langle i,j \rangle} W_{ij} x_i x_j - \sum_i b_i x_i \qquad (1)$$

A state vector x has a plurality of state variables as elements and represents a state of the Ising model. Expression (1) is an energy function formulated in a quadratic unconstrained binary optimization (QUBO) format. Note that, in a case of a problem that maximizes the energy, it is sufficient to make the sign of the energy function opposite.
A first term on a right side of Expression (1) is to integrate products of values of two state variables with a weighting coefficient without omission and duplication for all combinations of two state variables that may be selected from all state variables. Subscripts i and j are indices of the state variables. The reference $x_i$ indicates an i-th state variable. The reference $x_j$ indicates a j-th state variable. The reference $W_{ij}$ indicates a weighting coefficient indicating a weight or coupling strength between the i-th state variable and the j-th state variable. $W_{ij} = W_{ji}$ and $W_{ii} = 0$.

A second term on the right side of Expression (1) is to obtain a sum of products of each bias and a value of a state variable for all the state variables. The reference $b_i$ indicates a bias for the i-th state variable. Problem information including weighting coefficients and biases included in the energy function is stored in the storage unit 11.

When a value of the state variable $x_i$ changes to $1 - x_i$, an increment of the state variable $x_i$ may be represented as $\delta x_i = (1 - x_i) - x_i = 1 - 2x_i$. Therefore, for an energy function $E(x)$, an energy change amount $\Delta E_i$ accompanying a change in the state variable $x_i$ is represented by Expression (2).

[Expression 2]

$$
\begin{aligned}
\Delta E_i &= E(\boldsymbol{x})\Big|_{x_i \to 1-x_i} - E(\boldsymbol{x}) \\
&= -\delta x_i \left( \sum_j W_{ij} x_j + b_i \right) \\
&= -\delta x_i h_i \\
&= \begin{cases} -h_i & for \ x_i = 0 \to 1 \\ +h_i & for \ x_i = 1 \to 0 \end{cases}
\end{aligned}
\tag{2}
$$

The reference $h_i$ is called a local field and is represented by Expression (3). The local field may be called an LF.

[Expression 3]

$$
h_i = \sum_j W_{ij} x_j + b_i \tag{3}
$$

A change $\delta h_i^{(j)}$ of the local field $h_i$ when the state variable $x_j$ changes is represented by Expression (4).

[Expression 4]

$$
\delta h_i^{(j)} = \begin{cases} +W_{ij} & for \ x_j = 0 \to 1 \\ -W_{ij} & for \ x_j = 1 \to 0 \end{cases} \tag{4}
$$

The storage unit 11 holds the local field $h_i$ corresponding to each of the plurality of state variables. The processing unit 12 adds the change $\delta h_i^{(j)}$ to $h_i$ when a value of the state variable $x_j$ changes so as to obtain $h_i$ corresponding to a state after bit inversion.

The processing unit 12 uses a Metropolis method and a Gibbs method to determine whether or not to allow a state transition, for example, a change in the value of the state variable $x_i$, in which the energy change is $\Delta E_i$ in the search for the ground state. For example, in neighbor search for searching a transition from a certain state to another state where the energy is lower than the energy in the certain state, the processing unit 12 probabilistically allows a transition to not only a state where the energy is decreased but also a state where the energy is increased. For example, a probability A for accepting the change in the value of the state variable of the energy change $\Delta E$ is represented by Expression (5).

[Expression 5]

$$
A(\Delta E) = \begin{cases} \min\left[1, \exp(-\beta \cdot \Delta E)\right] & \text{Metropolis} \\ 1/\left[1 + \exp\left(\beta \cdot \Delta E\right)\right] & \text{Gibbs} \end{cases} \tag{5}
$$

The reference $\beta$ indicates a reciprocal of a temperature value $T$ ($T > 0$) ($\beta = 1/T$) and is called inverse temperature. A min operator indicates that a minimum value of arguments is taken. An upper right side of Expression (5) corresponds to the Metropolis method. A lower right side of Expression (5) corresponds to the Gibbs method. The processing unit 12 compares A with a uniform random number u for which 0 < u < 1 holds with respect to a certain index i, and when u < A holds, accepts the change in the value of the state variable $x_i$ and changes the value of the state variable $x_i$. When u < A does not hold, the processing unit 12 does not accept the change in the value of the state variable $x_i$ and does not change the value of the state variable $x_i$. According to Expression (5), the larger the value of $\Delta E$, the smaller A becomes. Furthermore, the smaller $\beta$, for example, the larger T, the easier it is to allow a state transition in which $\Delta E$ is large. For example, in a case where the Metropolis method is used, the processing unit 12 may make a transition determination by using Expression (6) which is a modification of Expression (5).

[Expression 6]

$$\ln(u) \times T \leq -\Delta E \qquad (6)$$

For example, the processing unit 12 allows the change in the value of the corresponding state variable in a case where the energy change $\Delta E$ satisfies Expression (6) for the uniform random number u ($0 < u \leq 1$). The processing unit 12 does not allow the change in the value of the corresponding state variable in a case where the energy change $\Delta E$ does not satisfy Expression (6) for the uniform random number u.

The processing unit 12 may speed up solution search by determining a state variable whose value is changed by parallel trials for a plurality of state variables. For example, the processing unit 12 calculates $\Delta E$ in parallel for each index belonging to a predetermined index range. Then, the processing unit 12 selects an index of a state variable whose value is changed by using a random number or the like from indices satisfying Expression (6) for $\Delta E$ among the respective indices. The predetermined index range is a partial index range of the entire index range. In the present example, the processing unit 12 performs, for each index range, a parallel trial for the index range, for example, a partial parallel trial.

Furthermore, the processing unit 12 parallelizes solution search processing to the problem by using a plurality of replicas, each of which indicates a plurality of state variables. For example, the processing unit 12 may execute the SA method in parallel for each of the plurality of replicas. Alternatively, the processing unit 12 may execute the replica exchange method by using the plurality of replicas.

The storage unit 11 holds replicas R0, R1, R2, and R3. R0 = {$x0_1$, $x0_2$, ..., $x0_N$}. The reference $x0_i$ indicates a state variable belonging to the replica R0. The reference N indicates the number of state variables. The entire range of the index is 1 to N. R1 = {$x1_1$, $x1_2$, ..., $x1_N$}. The reference $x1_i$ indicates a state variable belonging to the replica R1. R2 = {$x2_1$, $x2_2$, ..., $x2_N$}. The reference $x2_i$ indicates a state variable belonging to the replica R2. R3 = {$x3_1$, $x3_2$, ..., $x3_N$}. The reference $x3_i$ indicates a state variable belonging to the replica R3.

The processing unit 12 executes the partial parallel trials described above in parallel for each of the replicas R0 to R3 by a plurality of pipelines. The pipeline is processing of sequentially executing, for each replica, a series of stages belonging to the pipeline. To the pipeline, a replica to be processed may be input every cycle, which corresponds to an execution time of one stage. The number of pipelines matches the number of index ranges to be subjected to the partial parallel trials. The processing unit 12 sequentially executes the partial parallel trials for each of the plurality of index ranges, such as a first index range, a second index range, ..., for one replica. After performing the partial parallel trial of a last index range for a certain replica, the processing unit 12 returns to the partial parallel trial of the first index range for the replica.

The processing unit 12 executes processing P1 corresponding to a first pipeline and processing P2 corresponding to a second pipeline in parallel. The processing P1 corresponds to a series of stages in the first pipeline, for example, a first pipeline. The processing P2 corresponds to a series of stages in the second pipeline, for example, a second pipeline. To the processing P1, an index range {1 to m} is assigned. For example, to the processing P1, a group of state variables {$x_1$ to $x_m$} is assigned. For example, to the processing P1, {$x0_1$ to $x0_m$}, {$x1_1$ to $x1_m$}, {$x2_1$ to $x2_m$}, and {$x3_1$ to $x3_m$} are assigned. Furthermore, to the processing P2, an index range {m+1 to N} is assigned. For example, to the processing P2, a group of state variables {$x_{m+1}$ to $x_N$} is assigned. For example, to the processing P2, {$x0_{m+1}$ to $x0_N$}, {$x1_{m+1}$ to $x1_N$}, {$x2_{m+1}$ to $x2_N$}, and {$x3_{m+1}$ to $x3_N$} are assigned. The index range assigned to processing P1 and the index range assigned to processing P2 do not overlap.

Each of the processing P1 and the processing P2 has a plurality of stages of the same number. The plurality of stages includes each procedure in the partial parallel trial. In one example, the number of the plurality of stages is two. In this case, for example, a first stage is determination of any one state variable to be updated according to an energy change amount for each update candidate in a case where each state variable belonging to the corresponding index range is set as an update candidate. A second stage is update of the one state variable to be updated obtained by the determination. The update of the state variable is accompanied by update of the local field described above. Furthermore, these stages may be further subdivided.

The processing P1 includes stages P1-1 and P1-2. The stage P1-1 is a first stage of the processing P1. The stage P1-2 is a second stage of the processing P1. The second stage is executed after the first stage. In the stages P1-1 and P1-2, state variables belonging to the index range {1 to m} are to be processed. The processing P2 includes stages P2-1 and P2-2. The stage P2-1 is a first stage of the processing P2. The stage P2-2 is a second stage of the processing P2. In the stages P2-1 and P2-2, state variables belonging to the index range {m+1 to N} are to be processed.

The processing unit 12 processes replicas different from each other at the same timing in each stage included in the processing P1 and the processing P2. For example, the processing unit 12 includes an arithmetic circuit that executes the stage for each stage included in the processing P1 and the processing P2. For example, the processing unit 12 processes the replicas R0 to R3 as follows at each timing of times t1, t2, t3, t4, and t5. Note that, at the times t1 to t5, a direction from the time t1 to the time t5 is a positive direction of the time. Furthermore, it is assumed that the time t1 is a timing when a certain amount of time has elapsed since solution search using the replicas R0 to R3 by the processing unit 12 is started.

At the time t1, the processing unit 12 processes the replica R0 at the stage P1-1 and the replica R1 at the stage P1-2. Furthermore, the processing unit 12 processes the replica R2 at the stage P2-1 and the replica R3 at the stage P2-2.

At the time t2, the processing unit 12 processes the replica R3 at the stage P1-1 and the replica R0 at the stage P1-2. Furthermore, the processing unit 12 processes the replica R1 at the stage P2-1 and the replica R2 at the stage P2-2.

At the time t3, the processing unit 12 processes the replica R2 at the stage P1-1 and the replica R3 at the stage P1-2. Furthermore, the processing unit 12 processes the replica R0 at the stage P2-1 and the replica R1 at the stage P2-2.

At the time t4, the processing unit 12 processes the replica R1 at the stage P1-1 and the replica R2 at the stage P1-2. Furthermore, the processing unit 12 processes the replica R3 at the stage P2-1 and the replica R0 at the stage P2-2.

At the time t5, the processing unit 12 processes the replica R0 at the stage P1-1 and the replica R1 at the stage P1-2. Furthermore, the processing unit 12 processes the replica R2 at the stage P2-1 and the replica R3 at the stage P2-2.

The processing unit 12 makes a cycle of partial parallel trials for the entire index range in each of the replicas R0 to R3 at the times t1 to t4, and repeats the procedure of the cycle after the time t5. When completing the search by the SA method or the replica exchange method by repeatedly executing the procedure, the processing unit 12 outputs a set of values of a plurality of state variables indicated by each of the replicas R0 to R3 as a solution. For example, the processing unit 12 may output a solution having the smallest energy among the four solutions obtained for the replicas R0 to R3 as a best solution.

In this way, according to the data processing apparatus 10, first processing and second processing are executed in parallel. In the first processing, a plurality of stages is executed for a plurality of replicas. The plurality of stages includes determination of a first state variable to be updated and update of a value of the first state variable to be updated according to an energy change amount in a case where each of a plurality of the first state variables belonging to a first index range is set as an update candidate. In the second processing, a plurality of stages is executed for a plurality of replicas. The plurality of stages includes determination of a second state variable to be updated and update of a value of the second state variable to be updated according to an energy change amount in a case where each of a plurality of the second state variables belonging to a second index range is set as an update candidate. The second index range does not overlap with the first index range. Then, replicas different from each other are processed at the same timing in each stage included in the first processing and the second processing.

With this configuration, the data processing apparatus 10 may effectively utilize arithmetic resources.

For example, the data processing apparatus 10 shifts a processing timing of each replica so that replicas different from each other are processed at the same timing in each stage included in the first processing and the second processing. With this configuration, the principle of sequential processing in the MCMC method is observed for each replica. Thus, the data processing apparatus 10 may appropriately parallelize, for a plurality of replicas, search by partial parallel trials in a replica. Furthermore, the data processing apparatus 10 may appropriately obtain a solution by using each replica. In this way, the data processing apparatus 10 may effectively utilize the arithmetic resources of the processing unit 12 to efficiently perform solution.

Furthermore, it is sufficient for the data processing apparatus 10 to hold only one set of the entire weighting coefficients for the plurality of replicas. For example, the data processing apparatus 10 does not have to increase a memory capacity for holding the weighting coefficients even when the number of replicas increases.

Note that, although the two pipelines are exemplified in the example of the first embodiment, the data processing apparatus 10 may execute three or more pipelines in parallel. Furthermore, the number of stages in one pipeline may be 3 or more. The number of replicas may be a plurality of numbers other than 4. For example, in a case where the processing unit 12 executes three or more pipelines in parallel, optional two pipelines correspond to the first processing and the second processing.

[Second Embodiment]

Next, a second embodiment will be described.

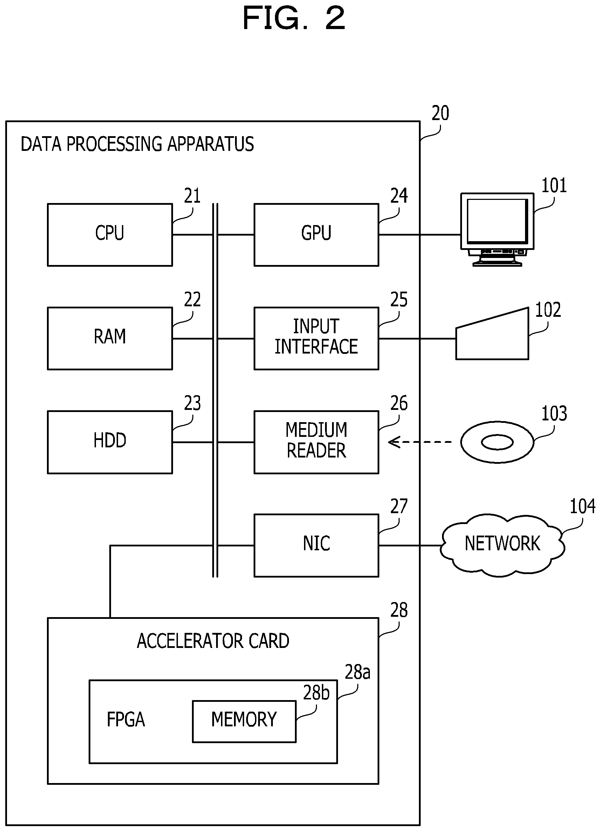

FIG. 2 is a diagram illustrating a hardware example of a data processing apparatus of the second embodiment.

A data processing apparatus 20 searches for a solution to a combinatorial optimization problem by using the MCMC method, and outputs the searched solution. The data processing apparatus 20 includes a CPU 21, a RAM 22, a hard disk drive (HDD) 23, a GPU 24, an input interface 25, a medium reader 26, a network interface card (NIC) 27, and an accelerator card 28.

The CPU 21 is a processor that executes a program command. The CPU 21 loads at least a part of a program and data stored in the HDD 23 into the RAM 22 to execute the program. Note that the CPU 21 may include a plurality of processor cores. Furthermore, the data processing apparatus 20 may include a plurality of processors. The processing described below may be executed in parallel by using a plurality of processors or processor cores. Furthermore, a set of a plurality of processors may be referred to as "multiprocessor" or simply "processor".

The RAM 22 is a volatile semiconductor memory that temporarily stores a program executed by the CPU 21 and data used by the CPU 21 for arithmetic operations. Note that the data processing apparatus 20 may include a memory of a type different from the RAM, or may include a plurality of memories.

The HDD 23 is a nonvolatile storage device that stores a program of software such as an operating system (OS), middleware, and application software, and data. Note that the data processing apparatus 20 may include another type of storage device such as a flash memory or a solid state drive (SSD), or may include a plurality of nonvolatile storage devices.

The GPU 24 outputs an image to a display 101 connected to the data processing apparatus 20 according to a command from the CPU 21. As the display 101, an optional type of display such as a cathode ray tube (CRT) display, a liquid crystal display (LCD), a plasma display, or an organic electroluminescence (OEL) display may be used.

The input interface 25 acquires an input signal from an input device 102 connected to the data processing apparatus 20, and outputs the input signal to the CPU 21. As the input device 102, a pointing device such as a mouse, a touch panel, a touch pad, or a trackball, a keyboard, a remote controller, a button switch, or the like may be used. Furthermore, a plurality of types of input devices may be connected to the data processing apparatus 20.

The medium reader 26 is a reading device that reads a program and data recorded on a recording medium 103. As the recording medium 103, for example, a magnetic disk, an optical disk, a magneto-optical (MO) disk, or a semiconductor memory may be used. The magnetic disk includes a flexible disk (FD) and an HDD. The optical disk includes a compact disc (CD) and a digital versatile disc (DVD).

The medium reader 26 copies, for example, a program and data read from the recording medium 103 to another recording medium such as the RAM 22 or the HDD 23. The read program is executed by the CPU 21, for example. Note that the recording medium 103 may be a portable recording medium and is sometimes used for distribution of the program and the data. Furthermore, the recording medium 103 and the HDD 23 may be referred to as computer-readable recording media.

The NIC 27 is an interface that is connected to a network 104 and communicates with another computer via the network 104. The NIC 27 is connected to a communication device such as a switch or a router by a cable, for example. The NIC 27 may be a wireless communication interface.

The accelerator card 28 is a hardware accelerator that searches for a solution to the problem represented by the Ising-type energy function of Expression (1) by using the MCMC method. By performing the MCMC method at a fixed temperature or the replica exchange method in which a state of an Ising model is exchanged between a plurality of temperatures, the accelerator card 28 may be used as a sampler to sample a state according to a Boltzmann distribution at the corresponding temperature. The accelerator card 28 executes annealing processing such as the replica exchange method and the SA method in which a temperature value is gradually lowered in order to solve the combinatorial optimization problem.

The SA method is a method for efficiently finding an optimal solution by sampling a state according to the Boltzmann distribution at each temperature value and lowering the temperature value used for the sampling from a high temperature to a low temperature, for example, increasing an inverse temperature $\beta$. Since the state changes to some extent even on a low temperature side, for example, even in a case where $\beta$ is large, there is a high possibility that a good solution may be found even when the temperature value is lowered quickly. For example, in a case where the SA method is used, the accelerator card 28 repeats an operation of lowering the temperature value after repeating a trial of a state transition at a fixed temperature value a certain number of times.

The replica exchange method is a method for independently executing the MCMC method by using a plurality of temperature values, and appropriately exchanging the temperature values for states obtained at the respective temperature value. A good solution may be efficiently found by searching a narrow range of a state space by the MCMC at a low temperature and searching a wide range of the state space by the MCMC at a high temperature. For example, in a case where the replica exchange method is used, the accelerator card 28 repeats an operation of performing trials of a state transition at each of a plurality of temperature values in parallel, and exchanging temperature values with a predetermined exchange probability for states obtained at the respective temperature values every time a certain number of trials are performed.

The accelerator card 28 includes an FPGA 28a. The FPGA 28a implements a search function in the accelerator card 28. The search function may be implemented by another type of electronic circuit such as a GPU or an ASIC. The FPGA 28a includes a memory 28b. The memory 28b holds data such as problem information used for search in the FPGA 28a and a solution searched for by the FPGA 28a. The FPGA 28a may include a plurality of memories including the memory 28b. The FPGA 28a is an example of the processing unit 12 of the first embodiment. The memory 28b is an example of the storage unit 11 of the first embodiment. Note that the accelerator card 28 may include a RAM outside the FPGA 28a, and data stored in the memory 28b may be temporarily saved in the RAM according to processing of the FPGA 28a.

A hardware accelerator that searches for a solution to a problem in an Ising format, such as the accelerator card 28, may be called an Ising machine, a Boltzmann machine, or the like.

The accelerator card 28 executes, in parallel, solution search by using a plurality of replicas. The replica indicates a plurality of state variables included in an energy function. In the following description, the state variable is expressed as a bit. Each bit contained in the energy function is associated with an integer index and is identified by the index.

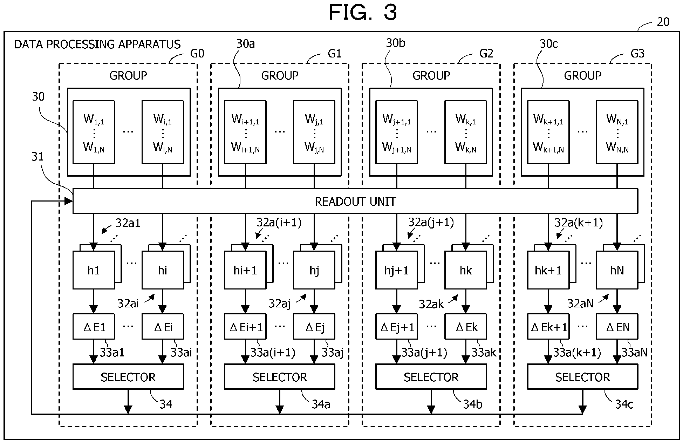

FIG. 3 is a diagram illustrating a functional example of the data processing apparatus.

The data processing apparatus 20 includes memory units 30, 30a, 30b, and 30c, a readout unit 31, h calculation units 32a1 to 32aN, ∆E calculation units 33a1 to 33aN, and selectors 34, 34a, 34b, and 34c. The reference N is the number of bits in one replica. In one example, N = 1024. In this case, for example, each bit is identified by an index from 1 to 1024.

The h calculation units 32a1 to 32aN indicate h calculation units 32a1, 32a2, ..., 32a(N-1), and 32aN. Illustrations of the h calculation units 32a2 to 32a(N-1) are omitted. The ∆E calculation units 33a1 to 33aN indicate ∆E calculation units 33a1, 33a2, ..., 33a(N-1), and 33aN. Illustrations of the ∆E calculation units 33a2, ..., 33a(N-1) are omitted.

For example, the memory units 30 to 30c are implemented by a plurality of memories including the memory 28b in the FPGA 28a. The readout unit 31, the h calculation units 32a1 to 32aN, the ∆E calculation units 33a1 to 33aN, and the selectors 34, 34a, 34b, and 34c are implemented by an electronic circuit of the FPGA 28a.

In FIG. 3, the h calculation units 32a1 to 32aN are denoted with a subscript n added to their names like an "hn" calculation unit to make it clearer that it corresponds to an n-th bit. Furthermore, in FIG. 3, the ∆E calculation units 33a1 to 33aN are denoted with a subscript n added to their names like a "∆En" calculation unit to make it clearer that it corresponds to an n-th bit.

For example, the h calculation unit 32a1 and the ∆E calculation unit 33a1 perform an arithmetic operation on a first bit of N bits. Furthermore, the h calculation unit 32ai and the ∆E calculation unit 33ai perform an arithmetic operation on an i-th bit. Likewise, a numerical value n at an end of reference signs such as "32an" and "33an" indicates that arithmetic operations corresponding to the n-th bit are performed.

Here, the data processing apparatus 20 divides the entire index into a plurality of index ranges, and performs, for each index range, a parallel trial of inversion of each bit corresponding to an index belonging to the index range, for example, a partial parallel trial. As an example, not covered by the claims, the data processing apparatus 20 divides the entire index into four index ranges. A first index range is 1 to i. A second index range is i+1 to j. A third index range is j+1 to k. A fourth index range is k+1 to N. In a case where N = 1024, the number of indices belonging to each index range may be 256. Each circuit described above in the FPGA 28a is divided into four groups G0, G1, G2, and G3 as follows.

The memory unit 30, the h calculation units 32a1 to 32ai, the ∆E calculation units 33a1 to 33ai, and the selector 34 belong to the group G0. The memory unit 30a, the h calculation units 32a(i+1) to 32aj, the ∆E calculation units 33a(i+1) to 33aj, and the selector 34a belong to the group G1. The memory unit 30b, the h calculation units 32a(j+1) to 32ak, the ∆E calculation units 33a(j+1) to 33ak, and the selector 34b belong to the group G2. The memory unit 30c, the h calculation units 32a(k+1) to 32aN, the ∆E calculation units 33a(k+1) to 33aN, and the selector 34c belong to the group G3.

In one group, determination as to whether to invert any one of bits included in a state vector and inversion of the corresponding bit according to a determination result correspond to one trial of solution search in the group. Note that one trial may not result in bit inversion. The one trial is repeatedly executed. In each group, a partial parallel trial in which the h calculation unit and the ∆E calculation unit perform, in parallel, arithmetic operations on each bit belonging to the group is performed to speed up the arithmetic operation. Furthermore, as will be described later, the data processing apparatus 20 performs partial parallel trials for replicas in parallel by a plurality of pipelines for the plurality of replicas, thereby making it possible to efficiently use the arithmetic resources of the FPGA 28a. For example, the data processing apparatus 20 processes a plurality of replicas in parallel by four pipelines corresponding to the groups G0 to G3. In the present example, it is assumed that the number of replicas is 16. The 16 replicas are expressed as replicas R0, R1, ..., R15.

Here, information stored in the memory units 30 to 30c will be described. Each of the memory units 30 to 30c stores a weighting coefficient $W = \{W_{\gamma,\delta}\}$ for each pair of a bit and another bit of its own group. When the number of bits of a state vector is N, the total number of weighting coefficients is $N^2$. $W_{\gamma,\delta} = W_{\delta,\gamma}$. $W_{\gamma,\gamma} = 0$.

The memory unit 30 stores weighting coefficients $W_{1,1}$ to $W_{1,N}$, $W_{2,1}$ to $W_{2,N}$, ..., $W_{i,1}$ to $W_{i,N}$. For example, the weighting coefficients $W_{1,1}$ to $W_{1,N}$ are used in an arithmetic operation corresponding to the first bit. The total number of weighting coefficients stored in the memory unit 30 is $i \times N$.

The memory unit 30a stores weighting coefficients $W_{i+1,1}$ to $W_{i+1,N}$, $W_{i+2,1}$ to $W_{i+2,N}$, ..., $W_{j,1}$ to $W_{j,N}$. The total number of weighting coefficients stored in the memory unit 30a is $(j - i) \times N$.

The memory unit 30b stores weighting coefficients $W_{j+1,1}$ to $W_{j+1,N}$, $W_{j+2,1}$ to $W_{j+2,N}$, ..., $W_{k,1}$ to $W_{k,N}$. The total number of weighting coefficients stored in the memory unit 30b is $(k - j) \times N$.

The memory unit 30c stores weighting coefficients $W_{k+1,1}$ to $W_{k+1,N}$, $W_{k+2,1}$ to $W_{k+2,N}$, ..., $W_{N,1}$ to $W_{N,N}$. The total number of weighting coefficients stored in the memory unit 30c is (N - k) $\times$ N.

In the following, description will be made by mainly exemplifying the h calculation unit 32a1 and the $\Delta$E calculation unit 33a1 corresponding to the first bit. The h calculation units 32a2 to 32aN and the $\Delta$E calculation units 33a2 to 33aN having the same names have similar functions.

The readout unit 31 reads out, from the memory units 30 to 30c, weighting coefficients W corresponding to indices supplied by the selectors 34 to 34c, and outputs the weighting coefficients W to the h calculation units 32a1 to 32aN. Since the number of selectors 34 to 34c is 4, at most four indices are simultaneously supplied to the readout unit 31. For example, the readout unit 31 simultaneously outputs at most four weighting coefficients for each of the h calculation units 32a1 to 32aN. The four weighting coefficients correspond to four replicas processed in parallel by the four selectors 34 to 34c. The readout unit 31 simultaneously acquires, for example, at most four weighting coefficients to be output to the h calculation unit 32a1 from $W_{1,1}$ to $W_{1,N}$. The readout unit 31 is an address decoder that converts the supplied indices into addresses of the memory units 30 to 30c and reads out the weighting coefficients at the addresses. The readout unit 31 may be provided separately for each of the groups G0 to G3.

The h calculation unit 32a1 calculates a local field $h_1$ for each of the four replicas processed in parallel on the basis of Expressions (3) and (4) by using the weighting coefficient supplied from the readout unit 31. For example, the h calculation unit 32a1 includes a register that holds the previously calculated local field $h_1$ for the corresponding replica, and by integrating $\delta h_1$ of the corresponding replica into the $h_1$, updates $h_1$ of the corresponding replica stored in the register. Note that a signal indicating an inversion direction of a bit indicated by an index to be inverted for each replica may be supplied from the selectors 34 to 34c to the h calculation unit 32a1. Alternatively, the readout unit 31 may receive the signal indicating the inversion direction and determine a sign of a weighting coefficient to be supplied to the h calculation unit 32a1 according to the inversion direction. An initial value of $h_1$ is calculated in advance by Expression (3) according to $b_1$ according to the problem, and is preset in the register of the h calculation unit 32a1.

The $\Delta$E calculation unit 33a1 calculates, by using the local field $h_1$ of one replica to be processed next held in the h calculation unit 32a1, an energy change $\Delta E_1$ corresponding to inversion of an own bit in the replica on the basis of Expression (2). The $\Delta$E calculation unit 33a1 may determine, for example, an inversion direction of the own bit from a current value of the own bit of the corresponding replica. For example, when the current value of the own bit is 0, 0 to 1 is the inversion direction, and when the current value of the own bit is 1, 1 to 0 is the inversion direction. The $\Delta$E calculation unit 33a1 supplies the calculated $\Delta E_1$ to the selector 34.

The selector 34 determines Expression (6) for each $\Delta$E simultaneously supplied from the $\Delta$E calculation units 33a1 to 33ai, and determines whether or not the corresponding bit may be inverted. For example, the selector 34 determines, on the basis of Expression (6), whether or not to allow inversion of a bit of an index = 1 for the energy change $\Delta E_1$ calculated by the $\Delta$E calculation unit 33a1. For example, the selector 34 determines whether or not the corresponding bit may be inverted for the corresponding replica according to comparison between $-\Delta E_1$ and thermal noise corresponding to the temperature value T. The thermal noise corresponds to a product of a natural logarithmic value of the uniform random number u and the temperature value T in Expression (6).

Moreover, the selector 34 randomly selects, on the basis of a random number, one of bits determined to be invertible on the basis of Expression (6), and supplies an index corresponding to the selected bit to the readout unit 31.

Note that the selector 34 may update a bit corresponding to the index by supplying the index to the storage unit that holds the bit corresponding to the replica. Furthermore, the selector 34 may update energy of the corresponding replica by adding $\Delta$E corresponding to the index to an energy holding unit that holds energy corresponding to a current bit corresponding to the corresponding replica. In FIG. 3, the storage unit that holds the current bit corresponding to each replica and the energy holding unit that holds the energy corresponding to the current bit of each replica are omitted. The storage unit and the energy holding unit may be implemented by, for example, a storage area of the memory 28b in the FPGA 28a, or may be implemented by the register.

The selectors 34a to 34c also function similarly to the selector 34 for bits of their own groups.

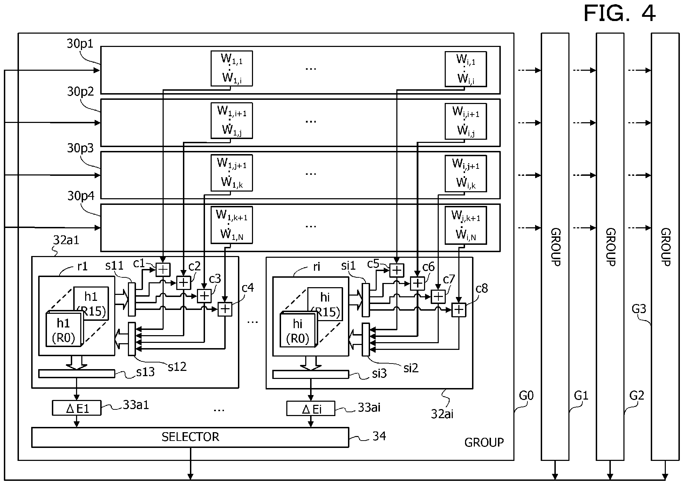

FIG. 4 is a diagram illustrating a functional example of local field update in a group.

The memory unit 30 includes memories 30p1, 30p2, 30p3, and 30p4. The readout unit 31 is omitted in FIG. 4. The memory 30p1 stores weighting coefficients $W_{1,1}$ to $W_{1,i}$, $W_{2,1}$ to $W_{2,i}$, ..., $W_{j,1}$ to $W_{i,i}$. The memory 30p2 stores $W_{1,i+1}$ to $W_{1,j}$, $W_{2,i+1}$ to $W_{2,j}$, ..., $W_{i,i+1}$ to $W_{i,j}$. The memory 30p3 stores $W_{1,j+1}$ to $W_{1,k}$, $W_{2,j+1}$ to $W_{2,k}$, ..., $W_{i,j+1}$ to $W_{i,k}$. The memory 30p4 stores $W_{1,k+1}$ to $W_{1,N}$, $W_{2,k+1}$ to $W_{2,N}$, ..., $W_{i,k+1}$ to $W_{i,N}$.

The readout unit 31 simultaneously reads out four weighting coefficients corresponding to bit update in at most four groups from the memories 30p1, 30p2, 30p3, and 30p4 for one h calculation unit, and supplies the four weighting coefficients to the h calculation unit. For example, when four indices of bits to be updated are input from the selectors 34 to 34c, the readout unit 31 reads out four weighting coefficients from each of the memories 30p1 to 30p4 for each of h calculation units 31a1 to 32ai, and supplies the four weighting coefficients to the h calculation units 31a1 to 32ai.

For example, one weighting coefficient is read out from $W_{1,1}$ to $W_{1,i}$ held in the memory 30p1 for the index of the bit to be updated output by the selector 34, and is supplied to the h calculation unit 32a1. One weighting coefficient is read out from $W_{1,i+1}$ to $W_{1,j}$ held in the memory 30p2 for the index of the bit to be updated output by the selector 34a, and is supplied to the h calculation unit 32a1. One weighting coefficient is read out from $W_{1,j+1}$ to $W_{1,k}$ held in the memory 30p3 for the index of the bit to be updated output by the selector 34b, and is supplied to the h calculation unit 32a1. One weighting coefficient is read out from $W_{1,k+1}$ to $W_{1,N}$ held in the memory 30p4 for the index of the bit to be updated output by the selector 34c, and is supplied to the h calculation unit 32a1. In a similar manner, at most four weighting coefficients are simultaneously supplied also to another h calculation unit.

Each of the h calculation units 32a1 to 32ai updates the local fields corresponding to the own bits of at most four replicas in parallel on the basis of Expressions (3) and (4) by using at most the four weighting coefficients supplied. For example, the h calculation unit 32a1 includes an h holding unit r1, selectors s11, s12, and s13, and adders c1, c2, c3, and c4.

The h holding unit r1 holds a local field of the own bit corresponding to each of 16 replicas. The h holding unit r1 may include a flip-flop, or may include four RAMs that read out one word per one read. The own bit in the h calculation unit 32a1 is a bit of an index = 1.

The selector s11 reads out local fields of replicas to be subjected to h update processed in each group from the h holding unit r1, and supplies the local fields to the adders c1, c2, c3, and c4. The maximum number of local fields that the selector s11 simultaneously reads out from the h holding unit r1 is 4.

The adders c1, c2, c3, and c4 respectively update the local fields by adding weighting coefficients read out from the memories 30p1 to 30p4 to the local fields supplied from the selector s11, and supply the local fields to the selector s12. As described above, the sign of the weighting coefficient may be determined by the readout unit 31 or may be determined by the h calculation unit 32a1 according to the inversion direction of the bit. The adder c1 updates a local field for a replica being processed in the group G0. The adder c2 updates a local field for a replica being processed in the group G1. The adder c3 updates a local field for a replica being processed in the group G2. The adder c4 updates a local field for a replica being processed in the group G3.

The selector s12 stores the local fields of the corresponding replicas updated by the adders c1 to c4 in the h holding unit r1.

The selector s13 reads out the local field of the own bit in the replica to be processed next in the group G0 from the h holding unit r1, and supplies the local field to the ∆E calculation unit 33a1.

In this way, the h calculation unit 32a1 may simultaneously update the local fields corresponding to the index = 1 for at most four replicas by the selectors s11 and s12 and the adders c1, c2, c3, and c4.

Another h calculation unit also has a function similar to that of the h calculation unit 32a1. For example, the h calculation unit 32ai includes an h holding unit ri, selectors si1, si2, and si3, and adders c5, c6, c7, and c8. The h holding unit ri holds a local field of the own bit corresponding to each of 16 replicas. The own bit in the h calculation unit 32ai is a bit of an index = i.

The selector si1 reads out local fields of replicas to be subjected to h update processed in each group from the h holding unit ri, and supplies the local fields to the adders c5, c6, c7, and c8. The maximum number of local fields that the selector si1 simultaneously reads out from the h holding unit ri is 4, as in the h holding unit r1.

The adders c5, c6, c7, and c8 respectively update the local fields by adding weighting coefficients read out from the memories 30p1 to 30p4 to the local fields supplied from the selector si1, and supply the local fields to the selector si2. As described above, the sign of the weighting coefficient may be determined by the readout unit 31 or may be determined by the h calculation unit 32ai according to the inversion direction of the bit. The adder c5 updates a local field for a replica being processed in the group G0. The adder c6 updates a local field for a replica being processed in the group G1. The adder c7 updates a local field for a replica being processed in the group G2. The adder c9 updates a local field for a replica being processed in the group G3.

The selector si2 stores the local fields of the corresponding replicas updated by the adders c5 to c8 in the h holding unit ri.

The selector si3 reads out the local field of the own bit in the replica to be processed next in the group G0 from the h holding unit ri, and supplies the local field to the ∆E calculation unit 33ai.

The groups G1 to G3 also have a local field update function similar to that of the group G0.

With the configuration described above, the data processing apparatus 20 executes four pipelines in parallel for 16 replicas.

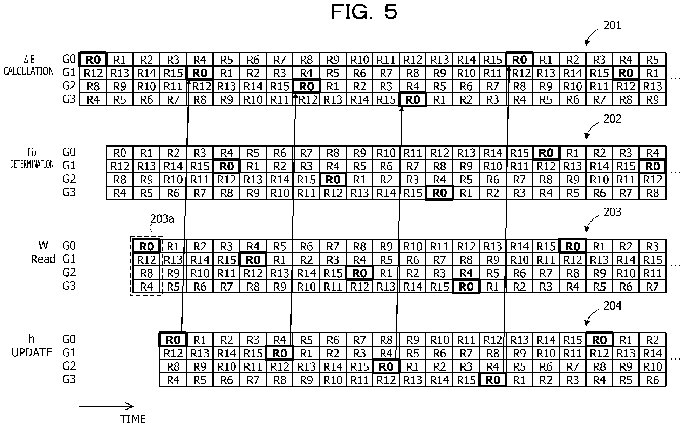

FIG. 5 is a diagram illustrating an example of pipeline processing.

As an example, it is assumed that the number of stages in one pipeline, for example, the number of stages is four. A first stage is ∆E calculation. The ∆E calculation is processing of calculating, in each group, ∆E in parallel for each bit belonging to the group. A second stage is flip determination. The flip determination is processing of selecting one bit to be inverted for ∆E of each bit calculated in parallel. A third stage is W Read. The W Read is processing of reading out weighting coefficients from the memory units 30 to 30c. A fourth stage is h update. The h update is processing of updating a local field related to the corresponding replica on the basis of the read out weighting coefficients. Inversion of the bit to be inverted in the corresponding replica is performed in parallel with the h update stage. Therefore, it may also be said that the h update stage is a bit update stage.

Time charts 201, 202, 203, and 204 represent replicas processed by the four pipelines at each timing by stage. The time chart 201 indicates the ΔE calculation stage. The time chart 202 indicates the flip determination stage. The time chart 203 indicates the W Read stage. The time chart 204 indicates the h update stage. A direction from left to right in the figure is a positive direction of a time.

G0, G1, G2, and G3 attached to the respective rows of the time charts 201, 202, 203, and 204 identify the pipelines to which the corresponding rows belong. In the pipeline corresponding to G0, arithmetic operations related to bits corresponding to the index range 1 to i are performed. In the pipeline corresponding to G1, arithmetic operations related to bits corresponding to the index range i+1 to j are performed. In the pipeline corresponding to G2, arithmetic operations related to bits corresponding to the index range j+1 to k are performed. In the pipeline corresponding to G3, arithmetic operations related to bits corresponding to the index range k+1 to N are performed.

The data processing apparatus 20 starts processing of the replica at a timing shifted by 4 stages or by 4 stages or more of the pipeline so that, after the h update of the replica being processed in the group G0 is ended, the processing of the same replica is performed in the group G1, for example. With this configuration, the ΔE calculation is performed in each replica by using a local field reflecting a previous bit update, so that the principle of sequential processing of the MCMC is observed.

Here, the local field update needs to be reflected in all bits of the corresponding replica. Thus, reading out of the weighting coefficients is performed simultaneously for all the bits of the four replicas. As exemplified in FIG. 5, the data processing apparatus 20 divides the memory holding the weighting coefficients corresponding to each group into, for example, the memories 30p1 to 30p4. Therefore, accesses corresponding to a plurality of replicas do not overlap with the same memory. For example, in Step 203a in the time chart 203, the weighting coefficients are read out as follows.

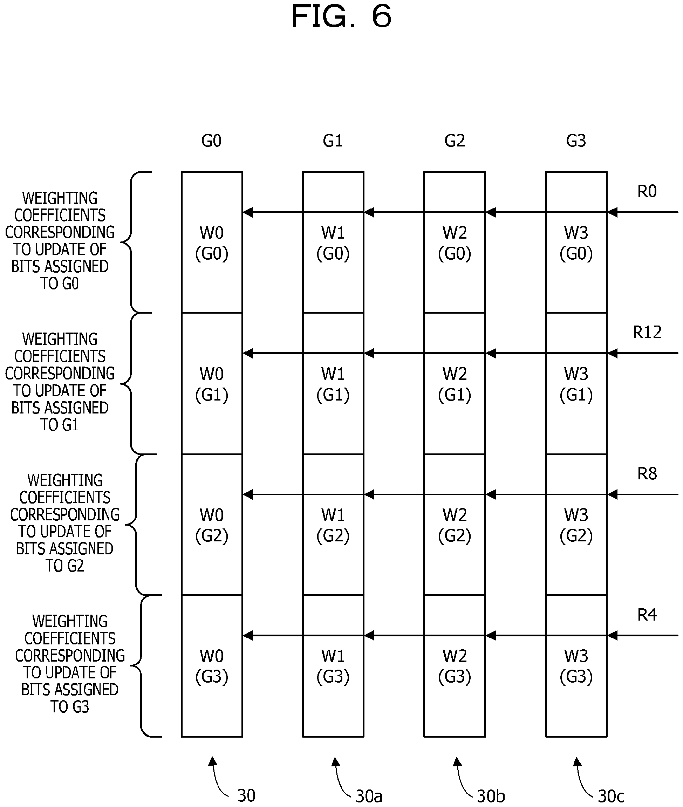

FIG. 6 is a diagram illustrating an example of reading out the weighting coefficients.

For example, the memory unit 30 of the group G0 holds weighting coefficients W0 (G0), W0 (G1), W0 (G2), and W0 (G3) separately in the memories 30p1, 30p2, 30p3, and 30p4, respectively. The memory unit 30a of the group G1 holds weighting coefficients W1 (G0), W1 (G1), W1 (G2), and W1 (G3) separately in four memories. The memory unit 30b of the group G2 holds weighting coefficients W2 (G0), W2 (G1), W2 (G2), and W2 (G3) separately in four memories. The memory unit 30c of the group G3 holds weighting coefficients W3 (G0), W3 (G1), W3 (G2), and W3 (G3) separately in four memories.

The weighting coefficient W0 (G0) is the weighting coefficients $W_{1,1}$ to $W_{1,i}$, $W_{2,1}$ to $W_{2,i}$, ..., $W_{i,1}$ to $W_{i,i}$ corresponding to update of bits assigned to G0, for example, bits in the index range 1 to i.

The weighting coefficient W0 (G1) is the weighting coefficients $W_{1,i+1}$ to $W_{1,j}$, $W_{2,i+1}$ to $W_{2,j}$, ..., $W_{i,i+1}$ to $W_{i,j}$ corresponding to update of bits assigned to G1, for example, bits in the index range i+1 to j.

The weighting coefficient W0 (G2) is the weighting coefficients $W_{1,j+1}$ to $W_{1,k}$, $W_{2,j+1}$ to $W_{2,k}$, ..., $W_{i,j+1}$ to $W_{i,k}$ corresponding to update of bits assigned to G2, for example, bits in the index range j+1 to k.

The weighting coefficient W0 (G3) is the weighting coefficients $W_{1,k+1}$ to $W_{1,N}$, $W_{2,k+1}$ to $W_{2,N}$, ..., $W_{i,k+1}$ to $W_{i,N}$ corresponding to update of bits assigned to G3, for example, bits in the index range k+1 to N.

The weighting coefficient W1 (G0) is weighting coefficients $W_{i+1,1}$ to $W_{i+1,i}$, $W_{i+2,1}$ to $W_{i+2,i}$, ..., $W_{j,1}$ to $W_{j,i}$ corresponding to the update of the bits assigned to G0.

The weighting coefficient W1 (G1) is weighting coefficients $W_{i+1,i+1}$ to $W_{i+1,j}$, $W_{i+2,i+1}$ to $W_{i+2,j}$, ..., $W_{j,i+1}$ to $W_{j,j}$ corresponding to the update of the bits assigned to G1.

The weighting coefficient W1 (G2) is weighting coefficients $W_{i+1,j+1}$ to $W_{i+1,k}$, $W_{i+2,j+1}$ to $W_{i+2,k}$, ..., $W_{j,j+1}$ to $W_{j,k}$ corresponding to the update of the bits assigned to G2.

The weighting coefficient W1 (G3) is weighting coefficients $W_{i+1,k+1}$ to $W_{i+1,N}$, $W_{i+2,k+1}$ to $W_{i+2,N}$, ..., $W_{j,k+1}$ to $W_{j,N}$ corresponding to the update of the bits assigned to G3.

The weighting coefficient W2 (G0) is weighting coefficients $W_{j+1,1}$ to $W_{j+1,i}$, $W_{j+2,1}$ to $W_{j+2,i}$, ..., $W_{k,1}$ to $W_{k,i}$ corresponding to the update of the bits assigned to G0.

The weighting coefficient W2 (G1) is weighting coefficients $W_{j+1,i+1}$ to $W_{j+1,j}$, $W_{j+2,i+1}$ to $W_{j+2,j}$, ..., $W_{k,i+1}$ to $W_{k,j}$ corresponding to the update of the bits assigned to G1.

The weighting coefficient W2 (G2) is weighting coefficients $W_{j+1,j+1}$ to $W_{j+1,k}$, $W_{j+2,j+1}$ to $W_{j+2,k}$, ..., $W_{k,j+1}$ to $W_{k,k}$ corresponding to the update of the bits assigned to G2.

The weighting coefficient W2 (G3) is weighting coefficients $W_{j+1,k+1}$ to $W_{j+1,N}$, $W_{j+2,k+1}$ to $W_{j+2,N}$, ..., $W_{k,k+1}$ to $W_{k,N}$ corresponding to the update of the bits assigned to G3.

The weighting coefficient W3 (G0) is weighting coefficients $W_{k+1,1}$ to $W_{k+1,i}$, $W_{k+2,1}$ to $W_{k+2,i}$, ..., $W_{N,1}$ to $W_{N,i}$ corresponding to the update of the bits assigned to G0.

The weighting coefficient W3 (G1) is weighting coefficients $W_{k+1,i+1}$ to $W_{k+1,j}$, $W_{k+2,i+1}$ to $W_{k+2,j}$, ..., $W_{N,i+1}$ to $W_{N,j}$ corresponding to the update of the bits assigned to G1.

The weighting coefficient W3 (G2) is weighting coefficients $W_{k+1,j+1}$ to $W_{k+1,k}$, $W_{k+2,j+1}$ to $W_{k+2,k}$, ..., $W_{N,j+1}$ to $W_{N,k}$ corresponding to the update of the bits assigned to G2.

The weighting coefficient W3 (G3) is weighting coefficients $W_{k+1,k+1}$ to $W_{k+1,N}$, $W_{k+2,k+1}$ to $W_{k+2,N}$, ..., $W_{N,k+1}$ to

$W_{N,N}$ corresponding to the update of the bits assigned to G3.

In this way, the memory units 30 to 30c divide the memory for the respective index ranges corresponding to the groups G0 to G3 and hold the weighting coefficients. In Step 203a, the weighting coefficient is read out from each memory holding W0 (G0) to W3 (G0) of the groups G0 to G3 for the bit update of the replica R0 in the group G0. Furthermore, the weighting coefficient is read out from each memory holding W0 (G1) to W3 (G1) of the groups G0 to G3 for the bit update of the replica R12 in the group G1. Furthermore, the weighting coefficient is read out from each memory holding W0 (G2) to W3 (G2) of the groups G0 to G3 for the bit update of the replica R8 in the group G2. Moreover, the weighting coefficient is read out from each memory holding W0 (G3) to W3 (G3) of the groups G0 to G3 for the bit update of the replica R4 in the group G3.

Thus, the data processing apparatus 20 may simultaneously read out each weighting coefficient corresponding to, for example, the update of the bits assigned to G0 of the replica R0, the update of the bits assigned to G1 of the replica R12, the update of the bits assigned to G2 of the replica R8, and the update of the bits assigned to G3 of the replica R4 in Step 203a, and may update the local fields of all the bits in each of the replicas R0, R12, R8, and R4 in parallel. At this time, accesses for reading out the weighting coefficients do not overlap with the same memory.

Next, a processing procedure of the data processing apparatus 20 will be described.

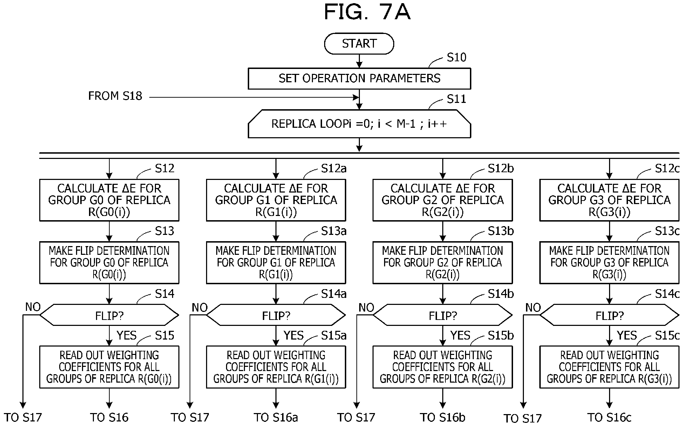

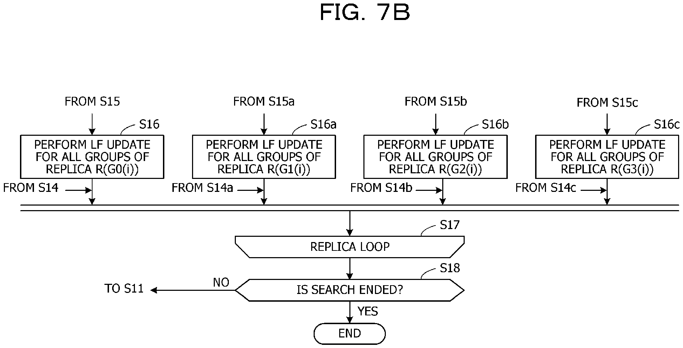

FIG. 7A and FIG. 7B are flowcharts illustrating a processing example of the data processing apparatus.

(S10) CPU 21 sets operation parameters in the FPGA 28a. For example, the operation parameters include the number of divided groups of a partial area, for example, the number of groups created by dividing the entire index range, and the number of replicas M. For example, the number of replicas M = 16. Furthermore, the operation parameters include a replica interval between groups. For example, the replica interval is 4. The replica interval is set to a value of the number of stages or equal to or larger than the number of stages in the pipeline. In this case, the groups G0 to G3 process replicas identified by the following numbers for the number of times of execution i of the following loop processing.

A replica number G0(i) processed by the group G0 is G0(i) = i mod M. A replica number G1(i) processed by the group G1 is G1(i) = i+12 mod M. A replica number G2(i) processed by the group G2 is G2(i) = i+8 mod M. A replica number G3(i) processed by the group G3 is G3(i) = i+4 mod M. For integers a and b, "a mod b" indicates the remainder when a is divided by b. According to the replica interval, +4, +8, and the like included in a are determined.

(S11) The FPGA 28a performs loop processing for the number of replicas. In the loop processing, the FPGA 28a causes the four groups G0 to G3 to operate in parallel with a shift of the replica interval between the groups. The FPGA 28a sets an initial value of the number of times of execution i of the loop processing to 0, and increments the number of times of execution i until i < M - 1 is satisfied.

The FPGA 28a executes the following Steps S12 to S12c in parallel.

(S12) The $\Delta E$ calculation units 33a1 to 33ai calculate $\Delta E_1$ to $\Delta E_i$ for the group G0 of the replica R(G0(i)), and output $\Delta E_1$ to $\Delta E_i$ to the selector 34. Note that i at an end of the sign of the $\Delta E$ calculation unit and a subscript i of $\Delta E$ indicate an end of an index of the group G0.

(S12a) The $\Delta E$ calculation units 33a(i+1) to 33aj calculate $\Delta E_{i+1}$ to $\Delta E$; for the group G1 of the replica R(G1(i)), and output $\Delta E_{i+1}$ to $\Delta E$; to the selector 34a.

(S12b) The $\Delta E$ calculation units 33a(j+1) to 33ak calculate $\Delta E_{j+1}$ to $\Delta E_k$ for the group G2 of the replica R(G2(i)), and output $\Delta E_{j+1}$ to $\Delta E_k$ to the selector 34b.

(S12c) The $\Delta E$ calculation units 33a(k+1) to 33aN calculate $\Delta E_{k+1}$ to $\Delta E_N$ for the group G3 of the replica R(G3(i)), and output $\Delta E_{k+1}$ to $\Delta E_N$ to the selector 34c.

The FPGA 28a executes the following Steps S13 to S13c in parallel.

(S13) The selector 34 makes flip determination for the group G0 of the replica R(G0(i)). For example, the selector 34 performs processing of selecting one bit as a bit to be flipped from among bits that are invertible on the basis of $\Delta E_1$ to $\Delta E_i$ and Expression (6), and determines whether or not the bit to be flipped is selected. For example, in a case where there are no bits that are invertible on the basis of $\Delta E_1$ to $\Delta E_i$ and Expression (6), the selector 34 does not select a bit to be flipped.

(S13a) The selector 34a makes flip determination for the group G1 of the replica R(G1(i)). For example, the selector 34a performs processing of selecting one bit as a bit to be flipped from among bits that are invertible on the basis of $AE_{i+1}$ to $\Delta E_j$ and Expression (6), and determines whether or not the bit to be flipped is selected.

(S13b) The selector 34b makes flip determination for the group G2 of the replica R(G2(i)). For example, the selector 34b performs processing of selecting one bit as a bit to be flipped from among bits that are invertible on the basis of $\Delta E_{j+1}$ to $\Delta E_k$ and Expression (6), and determines whether or not the bit to be flipped is selected.

(S13c) The selector 34c makes flip determination for the group G3 of the replica R(G3(i)). For example, the selector 34c performs processing of selecting one bit as a bit to be flipped from among bits that are invertible on the basis of $\Delta E_{k+1}$ to $\Delta E_N$ and Expression (6), and determines whether or not the bit to be flipped is selected.

The FPGA 28a executes the following Steps S14 to S14c in parallel.

(S14) In a case where the bit to be flipped is selected in the determination in Step S13, the selector 34 outputs an index of the selected bit to the readout unit 31 and advances the processing to Step S15. In a case where the selector 34 does not select the bit to be flipped in the determination in Step S13, the selector 34 skips the following Steps S15 and S16 and proceeds to Step S17. In the case of skipping Steps S15 and S16, the group G0 stands by without executing the W Read and the h update for the replica R(G0(i)) while other groups perform the steps corresponding to Steps S15 and S16.

(S14a) In a case where the bit to be flipped is selected in the determination in Step S13a, the selector 34a outputs an index of the selected bit to the readout unit 31 and advances the processing to Step S15a. In a case where the selector 34a does not select the bit to be flipped in the determination in Step S13a, the selector 34a skips the following Steps S15a and S16a and proceeds to Step S17. In the case of skipping Steps S15a and S16a, the group G1 stands by without executing the W Read and the h update for the replica R(G1(i)) while other groups perform the steps corresponding to Steps S15a and S16a.

(S14b) In a case where the bit to be flipped is selected in the determination in Step S13b, the selector 34b outputs an index of the selected bit to the readout unit 31 and advances the processing to Step S15b. In a case where the selector 34b does not select the bit to be flipped in the determination in Step S13b, the selector 34b skips the following Steps S15b and S16b and proceeds to Step S17. In the case of skipping Steps S15b and S16b, the group G2 stands by without executing the W Read and the h update for the replica R(G2(i)) while other groups perform the steps corresponding to Steps S15b and S16b.

(S14c) In a case where the bit to be flipped is selected in the determination in Step S13c, the selector 34c outputs an index of the selected bit to the readout unit 31 and advances the processing to Step S15c. In a case where the selector 34c does not select the bit to be flipped in the determination in Step S13c, the selector 34c skips the following Steps S15c and S16c and proceeds to Step S17. In the case of skipping Steps S15c and S16c, the group G3 stands by without executing the W Read and the h update for the replica R(G3(i)) while other groups perform the steps corresponding to Steps S15c and S16c.

The FPGA 28a executes the following Steps S15 to S15c in parallel.

(S15) The readout unit 31 reads out weighting coefficients for all groups of the replica R(G0(i)) on the basis of an index supplied from each of the selectors 34 to 34c.

(S15a) The readout unit 31 reads out weighting coefficients for all groups of the replica R(G1(i)) on the basis of an index supplied from each of the selectors 34 to 34c.

(S15b) The readout unit 31 reads out weighting coefficients for all groups of the replica R(G2(i)) on the basis of an index supplied from each of the selectors 34 to 34c.

(S15c) The readout unit 31 reads out weighting coefficients for all groups of the replica R(G3(i)) on the basis of an index supplied from each of the selectors 34 to 34c.

The FPGA 28a executes the following Steps S16 to S16c in parallel.

(S16) The h calculation units 32a1 to 32aN perform LF update, for example, local field update for all the groups of the replica R(G0(i)).

(S16a) The h calculation units 32a1 to 32aN perform LF update, for example, local field update for all the groups of the replica R(G1(i)).

(S16b) The h calculation units 32a1 to 32aN perform LF update, for example, local field update for all the groups of the replica R(G2(i)).

(S16c) The h calculation units 32a1 to 32aN perform LF update, for example, local field update for all the groups of the replica R(G3(i)).

(S17) The FPGA 28a repeatedly executes Steps S12 to S16, S12a to S16a, S12b to S16b, and S12c to S16c until the number of times of execution i of the loop processing satisfies i < M - 1, and when i < M - 1 is satisfied, exits the loop processing and proceeds to Step S18.

(S18) The FPGA 28a determines whether or not the search is ended. In a case where the search is ended, the FPGA 28a ends the processing. In a case where the search is not ended, the FPGA 28a advances the processing to Step S11.

Note that the SA method or the replica exchange method is used for the solution search by the FPGA 28a. In a case where the SA method is used, the FPGA 28a performs processing of lowering the temperature value used for the flip determination of each replica at a predetermined timing. Furthermore, in a case where the replica exchange method is used, the FPGA 28a performs processing of exchanging the temperature values used in the respective replicas between the replicas at a predetermined timing. Furthermore, in Step S16, the FPGA 28a also performs, in parallel, update of the bit to be flipped for the corresponding replica on the basis of the index of the bit to be inverted output by the selectors 34 to 34c in Steps S14 to S14c.

When the processing is ended, the FPGA 28a outputs a bit string corresponding to each replica finally obtained to the CPU 21 as a solution. The FPGA 28a may output energy corresponding to each replica to the CPU 21 together with the bit string. The FPGA 28a may output a solution having the lowest energy among the solutions obtained by the search to the CPU 21 as a final solution.

In this way, the data processing apparatus 20 of the second embodiment uses the groups G0 to G3 to execute, in parallel, the four pipelines that perform partial parallel trials of a plurality of replicas. With this configuration, it is possible to improve solution performance for relatively large-scale problems by effectively utilizing the resources of the arithmetic unit such as the FPGA 28a while observing the principle of sequential processing of the MCMC and ensuring convergence of the solution.

[Third Embodiment]

Next, a third embodiment will be described. Matters different from the second embodiment described above will be mainly described, and description of common matters will be omitted.

In the second embodiment, since all the weighting coefficients including zero coefficients are stored in the memory separately for each group, for example, the data processing apparatus 20 may process, in a fixed time, any case including a case where all the weighting coefficients are non-zero. On the other hand, not all the weighting coefficients are always non-zero. Depending on the problem, some weighting coefficients may be non-zero, while other weighting coefficients may be zero. In such a case, from a viewpoint of reducing a memory capacity for the weighting coefficients, it may be better to adopt a configuration in which the memory capacity is reduced by storing, in a memory, address information representing a position of a weighting coefficient and a value of the weighting coefficient instead of storing a weighting coefficient having a value of 0 in the memory.

Thus, in the third embodiment, a data processing apparatus 20 provides a function of reducing a memory capacity used as compared with the second embodiment without holding a weighting coefficient having a value of 0 in a memory.

In the data processing apparatus 20 of the third embodiment, a read out time of weighting coefficients for each group changes depending on the number of non-zero weighting coefficients to be read out accompanying bit update. Thus, in the third embodiment, the data processing apparatus 20 has a mechanism for stalling a pipeline according to the read out time of the weighting coefficients.

Also in the third embodiment, as in the second embodiment, it is assumed that the data processing apparatus 20 executes four pipelines as an example. Furthermore, the number of stages in one pipeline is 4. The number of replicas is 16.

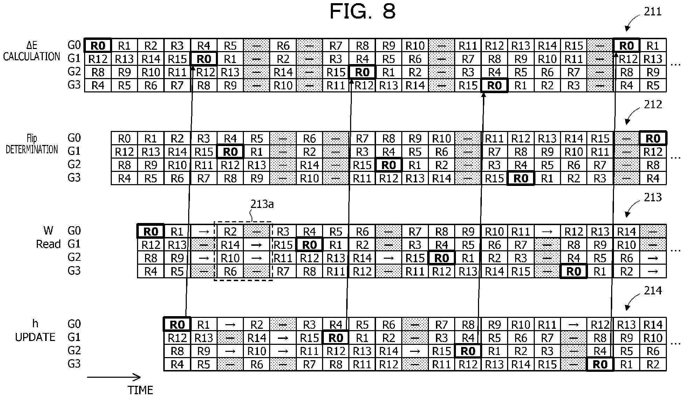

FIG. 8 is a diagram illustrating an example of pipeline processing of the third embodiment.

Time charts 211, 212, 213, and 214 represent replicas processed by the four pipelines at each timing by stage. The time chart 211 indicates a $\Delta E$ calculation stage. The time chart 212 indicates a flip determination stage. The time chart 213 indicates a W Read stage. The time chart 214 indicates an h update stage. A direction from left to right in the figure is a positive direction of a time. G0, G1, G2, and G3 attached to the respective rows of the time charts 211, 212, 213, and 214 identify pipelines to which the corresponding rows belong.

For example, in Step 213a in the time chart 213, it is assumed that, in reading out weighting coefficients for updating local fields of replicas R2, R6, R10, and R14, memory readout contention occurs and reading out of the weighting coefficients for the replicas R10 and R14 is delayed. In this case, the groups G0 to G3 stall the pipeline once in the W Read stage, and propagate the stall to the h update stage immediately after that. Likewise, the groups G0 to G3 propagate the stall of the pipeline also in the $\Delta E$ calculation stage and the flip determination stage immediately after the h update. With this configuration, the data processing apparatus 20 may maintain the principle of sequential processing of the MCMC in all the replicas.

Next, a memory configuration for storing weighting coefficients in consideration of sparsity of the weighting coefficients will be described.

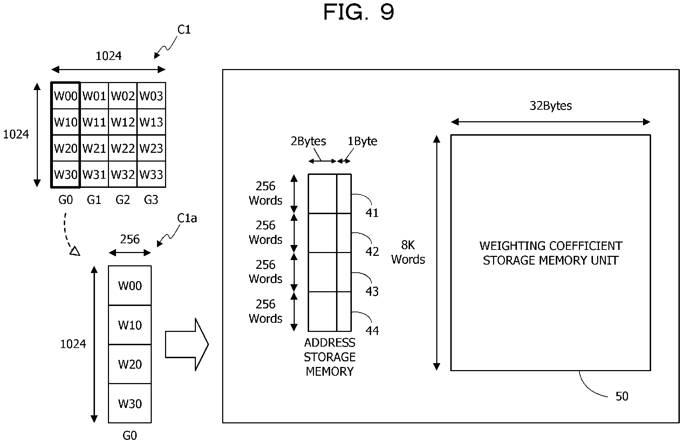

FIG. 9 is a diagram illustrating an example of the memory configuration for storing the weighting coefficients.

In a case where the number of bits in one replica is 1024, an entirety C1 of the weighting coefficients is represented by a matrix with 1024 row elements and 1024 column elements. In a case where 1024 bits are divided into 4 groups of 256 bits each, weighting coefficients assigned to one group, for example, the group G0, is a part C1a of the entirety C1. The part C1a includes 256 row elements and 1024 column elements.

The part C1a includes weighting coefficients W00, W10, W20, and W30. The weighting coefficient W00 is a weighting coefficient corresponding to update of bits assigned to the group G0. The weighting coefficient W10 is a weighting coefficient corresponding to update of bits assigned to the group G1. The weighting coefficient W20 is a weighting coefficient corresponding to update of bits assigned to the group G2. The weighting coefficient W30 is a weighting coefficient corresponding to update of bits assigned to the group G3.

The weighting coefficients included in the part C1a are stored in address storage memories 41, 42, 43, and 44 and a weighting coefficient storage memory unit 50. The address storage memories 41, 42, 43, and 44 and the weighting coefficient storage memory unit 50 are implemented by a plurality of memories in an FPGA 28a including a memory 28b.

The address storage memories 41 to 44 hold addresses that indicate storage positions of non-zero weighting coefficients among $256 \times 1024$ weighting coefficients, and that are addresses in the weighting coefficient storage memory unit 50. It is assumed that the number of address storage memories 41 to 44 is four corresponding to index ranges for the groups. With this configuration, the address storage memories 41 to 44 may be accessed simultaneously for at most four update bits in the four groups.

As an example, it is assumed that a size of one weighting coefficient is 2 Bytes. In this case, the address storage memories 41 to 44 are 3 Bytes × 1024 words in all four. One address storage memory is 256 words. A position of one word in the address storage memory, for example, a row position of the address storage memories 41 to 44 of FIG. 9, corresponds to an index of the update bit. One address storage memory holds, corresponding to the update bit, a logical address of the weighting coefficient storage memory unit 50 in which at most 256 weighting coefficients are stored in one group, and the number of words in the weighting coefficient storage memory unit 50. The logical address is 2 Bytes, and the number of Words is 1 Byte.

The weighting coefficient storage memory unit 50 stores substance of the weighting coefficient. The weighting coefficient storage memory unit 50 is 32 Bytes × 8 Kwords as a whole. As an example, it is assumed that the weighting coefficient storage memory unit 50 includes 256 words × 32 memories.

For example, in a case where all the weighting coefficients including weighting coefficients of 0 are held in the memory, a memory capacity of 2 Bytes × 1 K × 1 K = 2 MBytes is needed, but in the memory configuration of FIG. 9, the memory capacity may be suppressed to about 1/2.

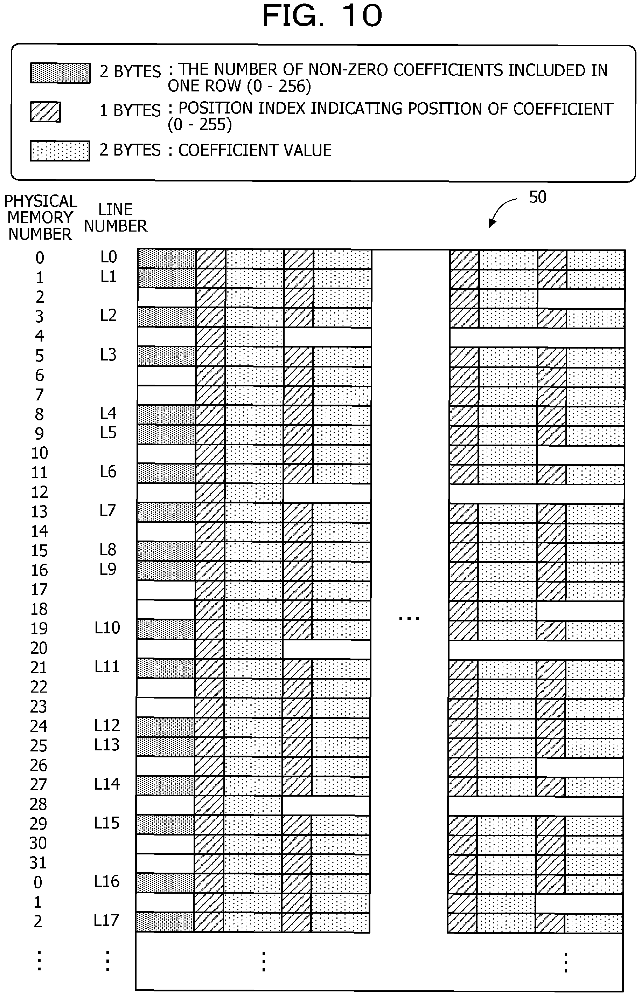

FIG. 10 is a diagram illustrating an example of the weighting coefficient storage memory unit.

In the weighting coefficient storage memory unit 50, one weighting coefficient includes a position index indicating a position in a row and a value of the weighting coefficient. The position index takes a value from 0 to 255, so it is 1 Byte. The value of the weighting coefficient is 2 Bytes as described above. Furthermore, each row has the number of non-zero weighting coefficients included in the row. The number takes a value from 0 to 256, so it is 2 Bytes.

The weighting coefficient storage memory unit 50 is constituted dividedly into 32 physical memories, for example, physical memories, in an interleaved manner with lower 5 bits of the logical address. When a read out access for weighting coefficients of each row occurs from the four groups to the weighting coefficient storage memory unit 50, the portions of accesses that do not overlap with the same memory may be simultaneously read out. The physical memory is identified by a physical memory number. The physical memory number takes a value from 0 to 31. Furthermore, a line number of FIG. 10 corresponds to each row of the address storage memories 41 to 44, for example, an index of an update bit. The line number takes a value from L0 to L1023.

In a case where a weighting coefficient is read out from a logical address and the number of words held in the address storage memory, first, one row in FIG. 10 is specified by the logical address of the weighting coefficient storage memory unit 50. For example, the FPGA 28a specifies the physical memory number of the physical memory by lower 5 bits of the logical address. Furthermore, the FPGA 28a specifies a physical memory address in the physical memory by, for example, lower 6 bits or more of the logical address. Furthermore, in a case where the number of words held in the address storage memory is a plurality of numbers, the FPGA 28a specifies another physical memory and a physical memory address in the another physical memory according to the number of words. Then, the FPGA 28a reads out the corresponding word from the weighting coefficient storage memory unit 50, and converts a position index of the read out word into an index of a bit belonging to the corresponding group. The FPGA 28a sets a weighting coefficient to 0 for an index that does not have a weighting coefficient in a read out word.

Examples of factors that cause the stall exemplified in FIG. 8 include a case where one line in the weighting coefficient storage memory unit 50 includes a plurality of words, or a case where a plurality of groups or a plurality of replicas accesses one physical memory simultaneously.

The data processing apparatus 20 may have the following stall control function for the memory configuration described above.

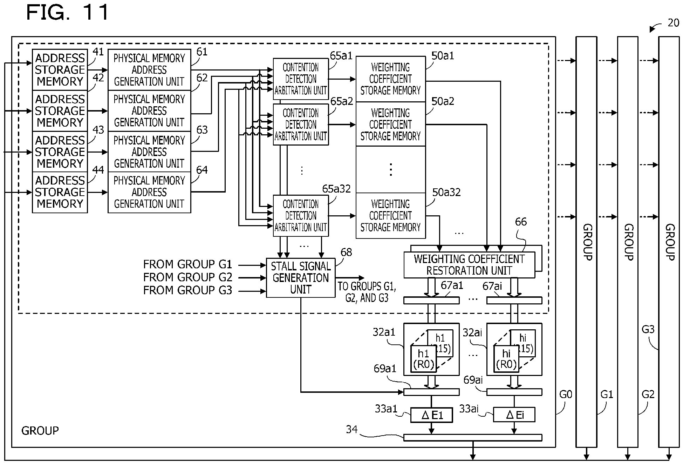

FIG. 11 is a diagram illustrating a functional example of stall control of the data processing apparatus.

In FIG. 11, description will be made by mainly exemplifying the group G0 in the data processing apparatus 20, but the groups G1 to G3 in the data processing apparatus 20 also have functions similar to that of the group G0. A memory unit 30 of the group G0 includes the address storage memories 41 to 44 and weighting coefficient storage memories 50a1, 50a2, ..., 50a32. Furthermore, the group G0 of the third embodiment includes, in addition to the functions exemplified in FIGs. 3 and 4, physical memory address generation units 61, 62, 63, and 64, contention detection arbitration units 65a1, 65a2, ..., 65a32, a weighting coefficient restoration unit 66, selectors 67a1 to 67ai, a stall signal generation unit 68, and selectors 69a1 to 69ai.

The physical memory address generation units 61, 62, 63, and 64, the contention detection arbitration units 65a1, 65a2, ..., 65a32, the weighting coefficient restoration unit 66, the selectors 67a1 to 67ai, the stall signal generation unit 68, and the selectors 69a1 to 69ai are implemented by an electronic circuit included in the FPGA 28a.

The selectors 69a1 to 69ai are provided instead of the selectors s13 to si3 of the h calculation units 32a1 to 32ai. Furthermore, in the third embodiment, a read out function of weighting coefficients in a part surrounded by a dotted line of FIG. 11 corresponds to the readout unit 31 of FIG. 3.

The address storage memories 41 to 44 hold the logical address and the number of words of the weighting coefficient storage memory unit 50 in which non-zero weighting coefficients are stored for an update bit of each group. Information regarding the update bit from each group is passed to each address storage memory, and the logical address and the number of words are read out in parallel from each address storage memory.

The weighting coefficient storage memories 50a1 to 50a32 are 32 physical memories that hold values of weighting coefficients. The weighting coefficient storage memories 50a1, 50a2, ..., 50a32 are included in the weighting coefficient storage memory unit 50. The weighting coefficient storage memories 50a1 to 50a32 are identified by physical memory numbers.

The physical memory address generation unit 61 acquires, from the address storage memory 41, a logical address and the number of words corresponding to an update bit of a replica processed in the group G0. The physical memory address generation unit 61 generates a physical memory number and a physical memory address of an access destination on the basis of the logical address and the number of words. The physical memory address generation unit 61 outputs the generated physical memory address to the contention detection arbitration unit corresponding to the generated physical memory number.

The physical memory address generation unit 62 acquires, from the address storage memory 42, a logical address and the number of words corresponding to an update bit of a replica processed in the group G1. The physical memory address generation unit 62 generates a physical memory number and a physical memory address of an access destination on the basis of the logical address and the number of words. The physical memory address generation unit 62 outputs the generated physical memory address to the contention detection arbitration unit corresponding to the generated physical memory number.

The physical memory address generation unit 63 acquires, from the address storage memory 43, a logical address and the number of words corresponding to an update bit of a replica processed in the group G2. The physical memory address generation unit 63 generates a physical memory number and a physical memory address of an access destination on the basis of the logical address and the number of words. The physical memory address generation unit 63 outputs the generated physical memory address to the contention detection arbitration unit corresponding to the generated physical memory number.

The physical memory address generation unit 64 acquires, from the address storage memory 44, a logical address and the number of words corresponding to an update bit of a replica processed in the group G3. The physical memory address generation unit 64 generates a physical memory number and a physical memory address of an access destination on the basis of the logical address and the number of words. The physical memory address generation unit 64 outputs the generated physical memory address to the contention detection arbitration unit corresponding to the generated physical memory number.

Note that, in the case of reading out a plurality of words, the physical memory address generation units 61 to 64 generate physical memory addresses in a plurality of cycles. Note that, in the case of reading out a plurality of words, the physical memory address generation units 61 to 64 may exercise control so as to simultaneously access a plurality of physical memories in a single cycle and entrust arbitration to the contention detection arbitration units 65a1 to 65a32.

The contention detection arbitration units 65a1 to 65a32 are provided to the weighting coefficient storage memories 50a1 to 50a32 on a one-to-one basis. The contention detection arbitration units 65a1 to 65a32 detect presence or absence of contention of accesses to the weighting coefficient storage memories 50a1 to 50a32 on the basis of physical memory addresses supplied by the physical memory address generation units 61 to 64, and arbitrate the accesses in contention. For example, the contention detection arbitration unit 65a1 detects contention of accesses to the weighting coefficient storage memory 50a1 on the basis of the physical memory addresses supplied by the physical memory address generation units 61 to 64.

In a case where accesses from each group are in contention, the contention detection arbitration units 65a1 to 65a32 causes any access to stand by according to priority. For example, the contention detection arbitration units 65a1 to 65a32 determine the priority by a method such as giving priority to a number having a small physical memory address or giving priority to an access having a large number of words to be accessed. The contention detection arbitration units 65a1 to 65a32 supply physical memory addresses of access destinations to the weighting coefficient storage memories 50a1 to 50a32, and causes weighting coefficients to be accessed to be output to the weighting coefficient restoration unit 66 from the weighting coefficient storage memories 50a1 to 50a32.

Furthermore, when detecting access contention, the contention detection arbitration units 65a1 to 65a32 output a signal indicating the detection of the access contention to the stall signal generation unit 68. The contention detection arbitration units 65a1 to 65a32 may determine the number of cycles to stall a pipeline according to a read out time of weighting coefficients accompanying the access contention, and may notify the stall signal generation unit 68 of the number of cycles.

The weighting coefficient restoration unit 66 restores a weighting coefficient having a value of 0 on the basis of a position index included in a word read out from the weighting coefficient storage memories 50a1 to 50a32.

The selectors 67a1 to 67ai are provided to the h calculation units 32a1 to 32ai on a one-to-one basis. The selectors 67a1 to 67ai supply the weighting coefficient restored by the weighting coefficient restoration unit 66 to the h calculation units 32a1 to 32ai.

The stall signal generation unit 68 generates a stall signal in the group G0 when detecting occurrence of access contention on the basis of OR of signals from the contention detection arbitration units 65a1 to 65a32. The stall signal generation unit 68 outputs the generated stall signal to the selectors 69a1 to 69ai and the stall signal generation units of other groups.

Furthermore, the stall signal generation unit 68 generates a stall signal when detecting occurrence of access contention in another group on the basis of OR of stall signals from the groups G1 to G3, and outputs the generated stall signal to the selectors 69a1 to 69ai.

The selectors 69a1 to 69ai are provided to $\Delta E$ calculation units 33a1 to 33ai on a one-to-one basis. The selectors 69a1 to 69ai acquire a local field of a replica to be processed next from the h calculation units 32a1 to 32ai, and output the local field to the $\Delta E$ calculation units 33a1 to 33ai. Furthermore, the selectors 69a1 to 69ai stall a pipeline on the basis of a stall signal supplied from the stall signal generation unit 68. For example, the selectors 69a1 to 69ai delay, on the basis of the stall signal, supply of the local field from the h calculation units 32a1 to 32ai to the $\Delta E$ calculation units 33a1 to 33ai by a read out time due to access contention.

Note that, in a case where the access contention occurs, a delay occurs in reading out of a weighting coefficient of a certain replica, and during the delay, a $\Delta E$ calculation stage and a flip determination stage of another replica are executed in a pipeline. Thus, each of the groups G0 to G3 may have a buffer for holding a result of the flip determination in each group performed after the occurrence of the read out delay due to the access contention. Then, it is conceivable that, after the reading out of the weighting coefficient accompanied by the access contention is ended, each of the groups G0 to G3 reads out the result of the flip determination sequentially from the buffer and performs h update.

In this way, the data processing apparatus 20 of the third embodiment holds only non-zero weighting coefficients in the physical memory such as the memory 28b in the FPGA 28a, and does not hold weighting coefficients having a value of 0 in the physical memory, so that a memory capacity of the physical memory may be saved. Furthermore, the data processing apparatus 20 uses the groups G0 to G3 to execute, in parallel, four pipelines that perform partial parallel trials of a plurality of replicas, and allows stall of the pipelines in a case where contention of accesses to the physical memory occurs when reading out the weighting coefficients. With this configuration, the data processing apparatus 20 may improve solution performance for relatively large-scale problems by effectively utilizing resources of the arithmetic unit such as the FPGA 28a while observing the principle of sequential processing of the MCMC and ensuring convergence of the solution.

Furthermore, it is sufficient for the data processing apparatus 20 to hold only one set of the entire weighting coefficients for a plurality of replicas. For example, the data processing apparatus 20 does not have to increase a memory capacity for holding the weighting coefficients even when the number of replicas increases.

The data processing apparatus 20 of the second and third embodiments includes a plurality of modules that divides a problem into a plurality of areas and performs partial parallel trials, and performs pipeline parallel processing on a plurality of replicas. In a case where one module is processing a certain replica between the modules of each partial parallel trial, until trial/update processing for the replica is completed, another module does not perform parallel trial processing for the replica, and during that time, a processing timing of a pipeline is shifted so that the processing on another replica is performed. With this configuration, arithmetic resources may be effectively utilized while observing the principle of sequential processing of the MCMC method.

Furthermore, in order to reduce a bottleneck of local field update processing, for example, a bottleneck of read out processing of a weighting coefficient from a memory in the module of each parallel trial, the data processing apparatus 20 has one or both of the following first and second mechanisms.

First, the data processing apparatus 20 divides a memory of weighting coefficients so that weights corresponding to partial areas of which the respective modules are in charge become separate memories (separate ports), and the weighting coefficients for update bit information of the partial areas received from the respective modules may be simultaneously read out. With this configuration, it is possible to avoid access contention to the memory accompanying reading out of the weighting coefficients. Note that the memory is only divided, and a total capacity is the same as that in a case where the memory is not divided.

Second, the data processing apparatus 20 has a mechanism for determining that a coefficient value is 0, does not read out a weighting coefficient having a coefficient value of 0 from the memory, reads out only a non-zero weighting coefficient, and reduces the number of times of reading out needed for the local field update processing. In this case, a cycle for reading out the weighting coefficients is variable depending on a degree of sparsity of the weighting coefficients, but the data processing apparatus 20 stalls a pipeline when the cycle is longer than a specified number of cycles. With this configuration, the memory capacity used for storing the weighting coefficients may be reduced.

Note that, in the second and third embodiments, the number of pipelines is four as an example, but the number of pipelines may be a plurality of numbers other than four. Furthermore, the number of stages in the pipeline may be a plurality of numbers other than four. Moreover, the number of replicas may be a plurality of numbers other than 16. For example, for four pipelines with four stages, the number of replicas may be less than or larger than 16.

The data processing apparatus 20 described above executes, the following processing.

The data processing apparatus 20 solves a problem represented by an energy function including a plurality of state variables. The data processing apparatus 20 holds a plurality of replicas, each of which indicates the plurality of state variables, in the storage unit. The data processing apparatus 20 executes the first pipeline and the second pipeline in parallel. The first pipeline is processing of executing, for the plurality of replicas, two stages including determining a first state variable to be updated and updating a value of the first state variable to be updated depending on an amount of change in a value of the energy function in a case where each of a plurality of the first state variables belonging to a first index range, which is a range of an index corresponding to each of the plurality of state variables, is used as an update candidate. The second pipeline is processing of executing, for the plurality of replicas, two stages including determining a second state variable to be updated and updating a value of the second state variable to be updated depending on an amount of change in the value of the energy function in a case where each of a plurality of the second state variables belonging to a second index range, which does not overlap with the first index range, is used as an update candidate. The data processing apparatus 20 processes replicas different from each other at the same timing in each stage included in the first pipeline and the second pipeline.

With this configuration, the data processing apparatus 20 may effectively utilize the resources of the arithmetic unit such as the FPGA 28a while maintaining the principle of sequential processing of the MCMC. The first pipeline is expressed as the first processing. The second pipeline is expressed as the second processing.

Note that the processing for each replica in the data processing apparatus 20 may be executed by the FPGA 28a or may be executed by another arithmetic unit such as the CPU 21 or the GPU. The arithmetic unit such as the FPGA 28a or the CPU 21 is an example of the processing unit in the data processing apparatus 20. Furthermore, the storage unit that holds the plurality of replicas may be implemented by the memory 28b or the register as described above, or may be implemented by the RAM 22. Moreover, the accelerator card 28 may also be said to be an example of the "data processing apparatus".

Furthermore, the data processing apparatus 20 holds, in the storage unit, information regarding a local field used to calculate the amount of change in the value of the energy function for each state variable included in each of the plurality of replicas. The local field is calculated on the basis of a weighting coefficient indicating weight for a pair of state variables included in the plurality of state variables. For example, the data processing apparatus 20 or the processing unit of the data processing apparatus 20 includes a first arithmetic circuit and a second arithmetic circuit. The first arithmetic circuit executes the first pipeline, for example, the first processing. The second arithmetic circuit executes the second pipeline, for example, the second processing. The first arithmetic circuit updates a first local field for each of the state variables belonging to the first index range of a first replica according to update of a value of the first state variable in the first replica, and updates a second local field for each of the state variables belonging to the first index range of a second replica according to update of a value of the second state variable in the second replica. The second arithmetic circuit updates a third local field for each of the state variables belonging to the second index range of the first replica according to the update of the value of the first state variable in the first replica, and updates a fourth local field for each of the state variables belonging to the second index range of the second replica according to the update of the value of the second state variable in the second replica.

In this way, the data processing apparatus 20 may speed up an arithmetic operation by executing, in parallel, the update of the first local field and the third local field accompanying the update of the value of the first state variable and the update of the second local field and the fourth local field accompanying the update of the value of the second state variable. In the second and third embodiments, the group G0 is an example of the first arithmetic circuit. The group G1 is an example of the second arithmetic circuit. Alternatively, it may be said that optional two groups of the groups G0 to G3 are examples of the first arithmetic circuit and the second arithmetic circuit.

Furthermore, the data processing apparatus 20 may include a first memory, a second memory, a third memory, and a fourth memory. The first memory holds a first weighting coefficient that indicates weight for a pair of the state variables belonging to the first index range and that is used for the update of the first local field. The second memory holds a second weighting coefficient that indicates weight for a pair of the state variable belonging to the first index range and the state variable belonging to the second index range and that is used for the update of the second local field. The third memory holds a third weighting coefficient that indicates weight for a pair of the state variable belonging to the second index range and the state variable belonging to the first index range and that is used for the update of the third local field. The fourth memory holds a fourth weighting coefficient that indicates weight for a pair of the state variables belonging to the second index range and that is used for the update of the fourth local field.

With this configuration, the data processing apparatus 20 may avoid occurrence of access contention to the memory accompanying reading out of the weighting coefficients when updating the first to fourth local fields. In the second embodiment, the memory 30p1 is an example of the first memory. The memory 30p2 is an example of the second memory. For example, in the second embodiment, the memory unit 30a of the group G1 includes a total of four memories including two memories corresponding to the third memory and the fourth memory.

Alternatively, the data processing apparatus 20 may include a first weighting coefficient storage memory unit, a first address storage memory, a second address storage memory, a second weighting coefficient storage memory unit, a third address storage memory, and a fourth address storage memory. The first weighting coefficient storage memory unit holds the weighting coefficient that is non-zero among the weighting coefficients indicating weight for a pair of the state variable belonging to the first index range and the state variable belonging to an entire index range. The first address

EP 4 148 628 B1

storage memory holds a storage destination address of the weighting coefficient to be read out according to update of the state variable belonging to the first index range, which is the storage destination address in the first weighting coefficient storage memory unit. The second address storage memory holds the storage destination address of the weighting coefficient to be read out according to update of the state variable belonging to the second index range, which is the storage destination address in the first weighting coefficient storage memory unit. The second weighting coefficient storage memory unit holds the weighting coefficient that is non-zero among the weighting coefficients indicating weight for a pair of the state variable belonging to the second index range and the state variable belonging to an entire index range. The third address storage memory holds the storage destination address of the weighting coefficient to be read out according to the update of the state variable belonging to the first index range, which is the storage destination address in the second weighting coefficient storage memory unit. The fourth address storage memory holds the storage destination address of the weighting coefficient to be read out according to the update of the state variable belonging to the second index range, which is the storage destination address in the second weighting coefficient storage memory unit.

In this way, the data processing apparatus 20 may reduce the memory capacity for storing the weighting coefficient by holding only the non-zero weighting coefficients in the memory, rather than holding all the weighting coefficients including the weighting coefficients of 0 in the memory.

In the third embodiment, the weighting coefficient storage memory unit 50 is an example of the first weighting coefficient storage memory unit. For example, in the third embodiment, the weighting coefficient storage memory unit corresponding to the second weighting coefficient storage memory unit is provided for the group G1. In the third embodiment, the address storage memory 41 is an example of the first address storage memory. Furthermore, the address storage memory 42 is an example of the second address storage memory. For example, in the third embodiment, a total of four address storage memories including two memories corresponding to the third address storage memory and the fourth address storage memory are provided for the group G1.

In this case, the first arithmetic circuit acquires, from the first address storage memory, a first storage destination address of a first weighting coefficient according to the update of the value of the first state variable in the first replica, and acquires, from the first weighting coefficient storage memory unit, the first weighting coefficient on the basis of the first storage destination address. At the same time, the first arithmetic circuit acquires, from the second address storage memory, a second storage destination address of a second weighting coefficient according to the update of the value of the second state variable in the second replica, and acquires, from the first weighting coefficient storage memory unit, the second weighting coefficient on the basis of the second storage destination address. Then, the first arithmetic circuit updates the first local field by the first weighting coefficient and updates the second local field by the second weighting coefficient. Furthermore, the second arithmetic circuit acquires, from the third address storage memory, a third storage destination address of a third weighting coefficient according to the update of the value of the first state variable in the first replica, and acquires, from the second weighting coefficient storage memory unit, the third weighting coefficient on the basis of the third storage destination address. At the same time, the second arithmetic circuit acquires, from the fourth address storage memory, a fourth storage destination address of a fourth weighting coefficient according to the update of the value of the second state variable in the second replica, and acquires, from the second weighting coefficient storage memory unit, the fourth weighting coefficient on the basis of the fourth storage destination address. Then, the second arithmetic circuit updates the third local field by the third weighting coefficient and updates the fourth local field by the fourth weighting coefficient.

In this way, the data processing apparatus 20 may speed up an arithmetic operation by executing, in parallel, the update of the first local field and the third local field accompanying the update of the value of the first state variable and the update of the second local field and the fourth local field accompanying the update of the value of the second state variable.

Moreover, the first weighting coefficient storage memory unit includes a plurality of first memories. Furthermore, the second weighting coefficient storage memory unit includes a plurality of second memories. The first arithmetic circuit detects access contention to any one of the plurality of first memories on the basis of the first storage destination address and the second storage destination address. Then, the first arithmetic circuit outputs a stall signal that stalls the first pipeline and the second pipeline according to a read out time of the weighting coefficient. For example, the first arithmetic circuit outputs a stall signal that stalls the first processing and the second processing according to the read out time of the weighting coefficient. Furthermore, when the second arithmetic circuit detects access contention to any one of the plurality of second memories on the basis of the third storage destination address and the fourth storage destination address, the second arithmetic circuit outputs the stall signal.

With this configuration, the data processing apparatus 20 may appropriately maintain the principle of sequential processing of the MCMC for each replica even in a case where reading out of the weighting coefficient is delayed due to the access contention. Note that the first arithmetic circuit and the second arithmetic circuit may, for example, specify the read out time of the weighting coefficient according to the number of words read out from the memory in which access contention occurs, and may determine a time to stall according to the read out time. For example, in a case where both the first and second arithmetic circuits output the stall signals, the first and second arithmetic circuits may determine the time to stall the first and second pipelines according to the longest read out time due to the access contention.

Furthermore, when the data processing apparatus 20 starts processing for a first replica by the first pipeline, the data processing apparatus 20 starts processing for the first replica by the second pipeline after the processing for the first replica by the first pipeline is completed. For example, when the data processing apparatus 20 starts the first processing for the first replica, the data processing apparatus 20 starts the second processing for the first replica after the first processing for the first replica is completed.

In this way, the data processing apparatus 20 shifts an input timing of each replica to the first pipeline and the second pipeline so that replicas different from each other are processed at the same timing in each stage included in the first and second pipelines, for example, the first processing and the second processing. With this configuration, the data processing apparatus 20 may effectively utilize the resources of the arithmetic unit such as the FPGA 28a while appropriately maintaining the principle of sequential processing of the MCMC.

Moreover, as exemplified in the second and third embodiments, the data processing apparatus 20 may execute, in parallel, three or more pipelines that execute a plurality of stages, for example, three or more types of processing that execute the plurality of stages, for three or more index ranges that do not overlap each other. The three or more pipelines include the first and second pipelines described above. For example, the three or more types of processing include the first processing and the second processing. The data processing apparatus 20 processes replicas different from each other at the same timing in each stage included in the three or more pipelines, for example, the three or more types of processing.

With this configuration, the data processing apparatus 20 may effectively utilize the resources of the arithmetic unit such as the FPGA 28a while maintaining the principle of sequential processing of the MCMC.

Note that the information processing according to the first embodiment may be implemented by causing the processing unit 12 to execute a program. Furthermore, the information processing according to the second embodiment may be implemented by causing the CPU 21 to execute the program. The program may be recorded in the computer-readable recording medium 103.

For example, the program may be distributed by distributing the recording medium 103 in which the program is recorded. Alternatively, the program may be stored in another computer and distributed by way of a network. For example, a computer may store (install) the program, which is recorded in the recording medium 103 or received from another computer, in a storage device such as the RAM 22 or the HDD 23, read the program from the storage device, and execute the program.

## Claims

1. A data processing apparatus (10) comprising:

   a storage unit (11) configured to store a plurality of replicas (R0, ..., R3), wherein each replica comprises an entire range (1, ..., N) of state variables (x01, ..., x0N; x11, ..., x1N; x21, ..., x2N; x31, ..., x3N), the state variables indicating 0 or 1 included in an energy function; and
   a processing unit (12) configured to execute, in parallel,
   first processing (P1) of changing, for the plurality of replicas (R0,...,R3), a value of a first target state variable of a plurality of first state variables that belong to a first index range (x01,...,x0m) based on an amount of change in a value of the energy function when the plurality of first state variables are candidates of changing, the first index range being one of a plurality of index ranges, the plurality of index ranges corresponding to groups of a plurality of state variables into which the entire range of state variables is divided so as not to overlap each other, and
   second processing (P2) of changing, for the plurality of replicas (R0,...,R3), a value of a second target state variable of a plurality of second state variables that belong to a second index range (x1m+1,...,x1N) that does not overlap with the first index range among the plurality of state variables based on an amount of change in a value of the energy function when the plurality of second state variables are candidates of changing, wherein
   replicas (R0, R1) of the plurality of replicas that are executed at the same timing in the first processing and the second processing are different from each other, and
   the state variable is a binary variable that takes a value of 0 or 1 and expressed as a bit,
   the first processing (P1) includes a first stage of the first processing (P1-1) and a second stage of the first processing (P1-2), and the second processing (P2) includes a first stage of the second processing (P2-1) and a second stage of the second processing (P2-2),
   wherein a second stage is executed after a first stage, and
   wherein at a first time (t1), the processing unit (12) processes a first replica (R0) at the first stage of the first processing (P1-1), and a second replica (R1) at a second stage of the first processing (P1-2), and a third replica (R2) at the first stage of the second processing (P2-1), and a fourth replica (R3) at a second stage of the second processing (P2-2),
   at a second time (t2) the processing unit (12) processes the fourth replica (R3) at the first stage of the first processing (P1-1) and the first replica (R0) at the second stage of the first processing (P1-2), and processes the second replica (R1) at the first stage of the second processing (P2-1) and the third replica (R2) at the second stage of the second processing (P2-2),

at a third time (t3) the processing unit (12) processes the third replica (R2) at the first stage of the first processing (P1-1) and the fourth replica (R3) at the second stage of the first processing (P1-2), and processes the first replica (R0) at the first stage of the second processing (P2-1) and the second replica (R1) at the second stage of the second processing (P2-2),

at a fourth time (t4) the processing unit (12) processes the second replica (R1) at the first stage of the first processing (P1-1) and the third replica (R2) at the second stage of the first processing (P1-2), and processes the fourth replica (R3) at the first stage of the second processing (P2-1) and the first replica (R0) at the second stage of the second processing (P2-2), and

the direction from the first time (t1) to a time (t5) after the fourth time (t4) is a positive direction of time.

2. A data processing program comprising instructions which, when the program is executed by at least one computer, causes the at least one computer to execute a process, the process comprising executing, in parallel,

first processing of changing, for a plurality of replicas, wherein each replica comprises an entire range of state variables, the state variables indicating 0 or 1 included in an energy function, a value of a first target state variable of a plurality of first state variables that belong to a first index range based on an amount of change in a value of the energy function when the plurality of first state variables are candidates of changing, the first index range being one of a plurality of index ranges, the plurality of index ranges corresponding to groups of a plurality of state variables into which the entire range of state variables is divided so as not to overlap each other, and

second processing of changing, for the plurality of replicas, a value of a second target state variable of a plurality of second state variables that belong to a second index range that does not overlap with the first index range among the plurality of state variables based on an amount of change in a value of the energy function when the plurality of second state variables are candidates of changing, wherein

replicas of the plurality of replicas that are executed at the same timing in the first processing and the second processing are different from each other, and

the state variable is a binary variable that takes a value of 0 or 1 and expressed as a bit,

the first processing (P1) includes a first stage of the first processing (P1-1) and a second stage of the first processing (P1-2) and the second processing (P2) includes a first stage of the second processing (P2-1) and a second stage of the second processing (P2-2), wherein a second stage is executed after a first stage, and

wherein at a first time (t1), the processing unit (12) processes a first replica (R0) at the first stage of the first processing (P1-1), and a second replica (R1) at a second stage of the first processing (P1-2), and a third replica (R2) at the first stage of the second processing (P2-1), and a fourth replica (R3) at a second stage of the second processing (P2-2),

at a second time (t2) the processing unit (12) processes the fourth replica (R3) at the first stage of the first processing (P1-1) and the first replica (R0) at the second stage of the first processing (P1-2), and processes the second replica (R1) at the first stage of the second processing (P2-1) and the third replica (R2) at the second stage of the second processing (P2-2),

at a third time (t3) the processing unit (12) processes the third replica (R2) at the first stage of the first processing (P1-1) and the fourth replica (R3) at the second stage of the first processing (P1-2), and processes the first replica (R0) at the first stage of the second processing (P2-1) and the second replica (R1) at the second stage of the second processing (P2-2),

at a fourth time (t4) the processing unit (12) processes the second replica (R1) at the first stage of the first processing (P1-1) and the third replica (R2) at the second stage of the first processing (P1-2), and processes the fourth replica (R3) at the first stage of the second processing (P2-1) and the first replica (R0) at the second stage of the second processing (P2-2), and

the direction from the first time (t1) to a time (t5) after the fourth time (t4) is a positive direction of time.

3. A data processing method carried out by a a computer to execute a process comprising:

executing, in parallel,

first processing of changing, for a plurality of replicas, wherein each replica comprises an entire range of state variables, the state variables indicating state variables indicating 0 or 1 included in an energy function, a value of a first target state variable of a plurality of first state variables that belong to a first index range based on an amount of change in a value of the energy function when the plurality of first state variables are candidates of changing, the first index range being one of a plurality of index ranges, the plurality of index ranges corresponding to groups of the plurality of state variables into which the entire range of state variables is divided so as not to overlap each other, and

second processing of changing, for the plurality of replicas, a value of a second target state variable of a plurality of second state variables that belong to a second index range that does not overlap with the first index range among the plurality of state variables based on an amount of change in a value of the energy function when the plurality of second state variables are candidates of changing, wherein

replicas of the plurality of replicas that are executed at the same timing in the first processing and the second processing are different from each other, and

the state variable is a binary variable that takes a value of 0 or 1 and expressed as a bit,

the first processing (P1) includes a first stage of the first processing (P1-1) and a second stage of the first processing (P1-2) and the second processing (P2) includes a first stage of the second processing (P2-1) and a second stage of the second processing (P2-2), wherein a second stage is executed after a first stage, and

wherein at a first time (t1), the processing unit (12) processes a first replica (R0) at the first stage of the first processing (P1-1), and a second replica (R1) at a second stage of the first processing (P1-2), and a third replica (R2) at the first stage of the second processing (P2-1), and a fourth replica (R3) at a second stage of the second processing (P2-2),

at a second time (t2) the processing unit (12) processes the fourth replica (R3) at the first stage of the first processing (P1-1) and the first replica (R0) at the second stage of the first processing (P1-2), and processes the second replica (R1) at the first stage of the second processing (P2-1) and the third replica (R2) at the second stage of the second processing (P2-2),

at a third time (t3) the processing unit (12) processes the third replica (R2) at the first stage of the first processing (P1-1) and the fourth replica (R3) at the second stage of the first processing (P1-2), and processes the first replica (R0) at the first stage of the second processing (P2-1) and the second replica (R1) at the second stage of the second processing (P2-2),

at a fourth time (t4) the processing unit (12) processes the second replica (R1) at the first stage of the first processing (P1-1) and the third replica (R2) at the second stage of the first processing (P1-2), and processes the fourth replica (R3) at the first stage of the second processing (P2-1) and the first replica (R0) at the second stage of the second processing (P2-2), and

the direction from the first time (t1) to a time (t5) after the fourth time (t4) is a positive direction of time.


**Patentansprüche**

1. Datenverarbeitungsvorrichtung (10), umfassend:

eine Speichereinheit (11), die konfiguriert ist, um eine Vielzahl von Repliken (R0, R3) zu speichern, wobei jede Replik eine vollständige Reihe (1, ... N) von Zustandsvariablen ($x01$, ... $x0N$; $x11$, ... $x1N$; $x21$, ... $x2N$; $x31$, ... $x3N$) umfasst, wobei die Zustandsvariablen 0 oder 1 anzeigen, die in einer Energiefunktion eingeschlossen sind; und wobei eine Verarbeitungseinheit (12) konfiguriert ist zum parallelen Ausführen

einer ersten Verarbeitung (P1) des Änderns, für die Vielzahl von Repliken (R0, ..., R3), eines Wertes einer ersten Zielzustandsvariablen einer Vielzahl von ersten Zustandsvariablen, die zu einer ersten Indexreihe ($x01$, ..., $x0m$) gehören, basierend auf einem Betrag der Änderung eines Wertes der Energiefunktion, wenn die Vielzahl von ersten Zustandsvariablen Kandidaten für eine Änderung sind,

wobei die erste Indexreihe eine von einer Vielzahl von Indexreihen ist, wobei die Vielzahl von Indexreihen Gruppen einer Vielzahl von Zustandsvariablen entsprechen, in die die vollständige Reihe von Zustandsvariablen unterteilt ist, so dass sie sich nicht überschneiden, und

einer zweiten Verarbeitung (P2) des Änderns, für die Vielzahl von Repliken (R0,...,R3), eines Wertes einer zweiten Zielzustandsvariablen einer Vielzahl von zweiten Zustandsvariablen, die zu einerzweiten Indexreihe ($x1m+1$, ..., $x1N$) gehören, die sich nicht mit der ersten Indexreihe überschneidet, aus der Vielzahl von Zustandsvariablen, basierend auf einem Betrag der Änderung eines Wertes der Energiefunktion, wenn die Vielzahl von zweiten Zustandsvariablen Kandidaten für eine Änderung sind, wobei Repliken (R0, R1) der Vielzahl von Repliken, die zum gleichen Zeitpunkt in der ersten Verarbeitung und der zweiten Verarbeitung ausgeführt werden, voneinander verschieden sind, und die Zustandsvariable eine binäre Variable ist, die einen Wert von 0 oder 1 annimmt und als Bit ausgedrückt wird, die erste Verarbeitung (P1) eine erste Stufe der ersten Verarbeitung (P1-1) und eine zweite Stufe der ersten Verarbeitung (P1-2) einschließt und die zweite Verarbeitung (P2) eine erste Stufe der zweiten Verarbeitung

EP 4 148 628 B1

(P2-1) und eine zweite Stufe der zweiten Verarbeitung (P2-2) einschließt,
wobei eine zweite Stufe nach der ersten Stufe ausgeführt wird und
wobei zu einem ersten Zeitpunkt (t1) die Verarbeitungseinheit (12) eine erste Replik (R0) in der ersten Stufe der ersten Verarbeitung (P1-1) und eine zweite Replik (R1) in einer zweiten Stufe der ersten Verarbeitung (P1-2) und eine dritte Replik (R2) in der ersten Stufe der zweiten Verarbeitung (P2-1) und eine vierte Replik (R3) in einer zweiten Stufe der zweiten Verarbeitung (P2-2) verarbeitet,
zu einem zweiten Zeitpunkt (t2) die Verarbeitungseinheit (12) die vierte Replik (R3) in der ersten Stufe der ersten Verarbeitung (P1-1) und die erste Replik (R0) in der zweiten Stufe der ersten Verarbeitung (P1-2) verarbeitet und die zweite Replik (R1) in der ersten Stufe der zweiten Verarbeitung (P2-1) und die dritte Replik (R2) in der zweiten Stufe der zweiten Verarbeitung (P2-2) verarbeitet,
zu einem dritten Zeitpunkt (t3) die Verarbeitungseinheit (12) die dritte Replik (R2) in der ersten Stufe der ersten Verarbeitung (P1-1) und die vierte Replik (R3) in der zweiten Stufe der ersten Verarbeitung (P1-2) verarbeitet und die erste Replik (R0) in der ersten Stufe der zweiten Verarbeitung (P2-1) und die zweite Replik (R1) in der zweiten Stufe der zweiten Verarbeitung (P2-2) verarbeitet,
zu einem vierten Zeitpunkt (t4) die Verarbeitungseinheit (12) die zweite Replik (R1) in der ersten Stufe der ersten Verarbeitung (P1-1) und die dritte Replik (R2) in der zweiten Stufe der ersten Verarbeitung (P1-2) verarbeitet und die vierte Replik (R3) in der ersten Stufe der zweiten Verarbeitung (P2-1) und die erste Replik (R0) in der zweiten Stufe der zweiten Verarbeitung (P2-2) verarbeitet, und
die Richtung vom ersten Zeitpunkt (t1) zu einem Zeitpunkt (t5) nach dem vierten Zeitpunkt (t4) eine positive Zeitrichtung ist.

2. Datenverarbeitungsprogramm, das Anweisungen umfasst, die, wenn das Programm von mindestens einem Computer ausgeführt wird, den mindestens einen Computer veranlasst, einen Prozess auszuführen, wobei der Prozess das

parallele Ausführen umfasst von
einer ersten Verarbeitung des Änderns, für eine Vielzahl von Repliken, wobei jede Replik eine vollständige Reihe von Zustandsvariablen umfasst, wobei die Zustandsvariablen 0 oder 1 anzeigen, die in einer Energiefunktion eingeschlossen sind, eines Wertes einer ersten Zielzustandsvariablen einer Vielzahl von ersten Zustandsvariablen, die zu einer ersten Indexreihe gehören, basierend auf einem Betrag der Änderung eines Wertes der Energiefunktion, wenn die Vielzahl von ersten Zustandsvariablen Kandidaten für eine Änderung sind, wobei die erste Indexreihe eine von einer Vielzahl von Indexreihen ist, wobei die Vielzahl von Indexreihen Gruppen einer Vielzahl von Zustandsvariablen entspricht, in die die gesamte Reihe von Zustandsvariablen unterteilt ist, so dass sie sich nicht überschneiden, und
einer zweiten Verarbeitung des Änderns, für die Vielzahl von Repliken, eines Wertes einer zweiten Zielzustandsvariablen einer Vielzahl von zweiten Zustandsvariablen, die zu einer zweiten Indexreihe gehören, die sich nicht mit der ersten Indexreihe überschneidet, aus der Vielzahl von Zustandsvariablen, basierend auf einem Betrag der Änderung eines Wertes der Energiefunktion, wenn die Vielzahl von zweiten Zustandsvariablen Kandidaten für eine Änderung sind, wobei
Repliken der Vielzahl von Repliken, die zum gleichen Zeitpunkt in der ersten Verarbeitung und in der zweiten Verarbeitung ausgeführt werden, voneinander verschieden sind, und
die Zustandsvariable eine binäre Variable ist, die einen Wert von 0 oder 1 annimmt und als Bit ausgedrückt wird, die erste Verarbeitung (P1) eine erste Stufe der ersten Verarbeitung (P1-1) und eine zweite Stufe der ersten Verarbeitung (P1-2) einschließt und die zweite Verarbeitung (P2) eine erste Stufe der zweiten Verarbeitung (P2-1) und eine zweite Stufe der zweiten Verarbeitung (P2-2) einschließt, wobei eine zweite Stufe nach der ersten Stufe ausgeführt wird und
wobei zu einem ersten Zeitpunkt (t1) die Verarbeitungseinheit (12) eine erste Replik (R0) in der ersten Stufe der ersten Verarbeitung (P1-1) und eine zweite Replik (R1) in einer zweiten Stufe der ersten Verarbeitung (P1-2) und eine dritte Replik (R2) in der ersten Stufe der zweiten Verarbeitung (P2-1) und eine vierte Replik (R3) in einer zweiten Stufe der zweiten Verarbeitung (P2-2) verarbeitet,
zu einem zweiten Zeitpunkt (t2) die Verarbeitungseinheit (12) die vierte Replik (R3) in der ersten Stufe der ersten Verarbeitung (P1-1) und die erste Replik (R0) in der zweiten Stufe der ersten Verarbeitung (P1-2) verarbeitet und die zweite Replik (R1) in der ersten Stufe der zweiten Verarbeitung (P2-1) und die dritte Replik (R2) in der zweiten Stufe der zweiten Verarbeitung (P2-2) verarbeitet,
zu einem dritten Zeitpunkt (t3) die Verarbeitungseinheit (12) die dritte Replik (R2) in der ersten Stufe der ersten Verarbeitung (P1-1) und die vierte Replik (R3) in der zweiten Stufe der ersten Verarbeitung (P1-2) verarbeitet und die erste Replik (R0) in der ersten Stufe der zweiten Verarbeitung (P2-1) und die zweite Replik (R1) in der zweiten Stufe der zweiten Verarbeitung (P2-2) verarbeitet,

zu einem vierten Zeitpunkt (t4) die Verarbeitungseinheit (12) die zweite Replik (R1) in der ersten Stufe der ersten Verarbeitung (P1-1) und die dritte Replik (R2) in der zweiten Stufe der ersten Verarbeitung (P1-2) verarbeitet und die vierte Replik (R3) in der ersten Stufe der zweiten Verarbeitung (P2-1) und die erste Replik (R0) in der zweiten Stufe der zweiten Verarbeitung (P2-2) verarbeitet, und

die Richtung vom ersten Zeitpunkt (t1) zu einem Zeitpunkt (t5) nach dem vierten Zeitpunkt (t4) eine positive Zeitrichtung ist.

3. Datenverarbeitungsverfahren, das von einem Computer ausgeführt wird, um einen Prozess auszuführen, der Folgendes umfasst:

paralleles Ausführen

einer ersten Verarbeitung des Änderns für eine Vielzahl von Repliken, wobei jede Replik eine vollständige Reihe von Zustandsvariablen umfasst, wobei die Zustandsvariablen Zustandsvariablen 0 oder 1 anzeigen, die in einer Energiefunktion eingeschlossen sind, eines Wertes einer ersten Zielzustandsvariablen einer Vielzahl von ersten Zustandsvariablen, die zu einer ersten Indexreihe gehören, basierend auf einem Betrag der Änderung eines Wertes der Energiefunktion, wenn die Vielzahl von ersten Zustandsvariablen Kandidaten für eine Änderung sind, wobei die erste Indexreihe eine von einer Vielzahl von Indexreihen ist, wobei die Vielzahl von Indexreihen Gruppen der Vielzahl von Zustandsvariablen entspricht, in die die gesamte Reihe von Zustandsvariablen unterteilt ist, so dass sie sich nicht überschneiden, und

einer zweiten Verarbeitung des Änderns, für die Vielzahl von Repliken, eines Wertes einer zweiten Zielzustandsvariablen einer Vielzahl von zweiten Zustandsvariablen ist, die zu einer zweiten Indexreihe gehören, der sich nicht mit der ersten Indexreihe überschneidet, aus der Vielzahl von Zustandsvariablen, basierend auf einem Betrag der Änderung eines Wertes der Energiefunktion, wenn die Vielzahl von zweiten Zustandsvariablen Kandidaten für eine Änderung sind, wobei

Repliken der Vielzahl von Repliken, die zum gleichen Zeitpunkt in der ersten Verarbeitung und in der zweiten Verarbeitung ausgeführt werden, voneinander verschieden sind, und

die Zustandsvariable eine binäre Variable ist, die einen Wert von 0 oder 1 annimmt und als Bit ausgedrückt wird, die erste Verarbeitung (P1) eine erste Stufe der ersten Verarbeitung (P1-1) und eine zweite Stufe der ersten Verarbeitung (P1-2) einschließt und die zweite Verarbeitung (P2) eine erste Stufe der zweiten Verarbeitung (P2-1) und eine zweite Stufe der zweiten Verarbeitung (P2-2) einschließt, wobei eine zweite Stufe nach der ersten Stufe ausgeführt wird und

wobei zu einem ersten Zeitpunkt (t1) die Verarbeitungseinheit (12) eine erste Replik (R0) in der ersten Stufe der ersten Verarbeitung (P1-1) und eine zweite Replik (R1) in einer zweiten Stufe der ersten Verarbeitung (P1-2) und eine dritte Replik (R2) in der ersten Stufe der zweiten Verarbeitung (P2-1) und eine vierte Replik (R3) in einer zweiten Stufe der zweiten Verarbeitung (P2-2) verarbeitet,

zu einem zweiten Zeitpunkt (t2) die Verarbeitungseinheit (12) die vierte Replik (R3) in der ersten Stufe der ersten Verarbeitung (P1-1) und die erste Replik (R0) in der zweiten Stufe der ersten Verarbeitung (P1-2) verarbeitet und die zweite Replik (R1) in der ersten Stufe der zweiten Verarbeitung (P2-1) und die dritte Replik (R2) in der zweiten Stufe der zweiten Verarbeitung (P2-2) verarbeitet,

zu einem dritten Zeitpunkt (t3) die Verarbeitungseinheit (12) die dritte Replik (R2) in der ersten Stufe der ersten Verarbeitung (P1-1) und die vierte Replik (R3) in der zweiten Stufe der ersten Verarbeitung (P1-2) verarbeitet und die erste Replik (R0) in der ersten Stufe der zweiten Verarbeitung (P2-1) und die zweite Replik (R1) in der zweiten Stufe der zweiten Verarbeitung (P2-2) verarbeitet,

zu einem vierten Zeitpunkt (t4) die Verarbeitungseinheit (12) die zweite Replik (R1) in der ersten Stufe der ersten Verarbeitung (P1-1) und die dritte Replik (R2) in der zweiten Stufe der ersten Verarbeitung (P1-2) verarbeitet und die vierte Replik (R3) in der ersten Stufe der zweiten Verarbeitung (P2-1) und die erste Replik (R0) in der zweiten Stufe der zweiten Verarbeitung (P2-2) verarbeitet, und

die Richtung vom ersten Zeitpunkt (t1) zu einem Zeitpunkt (t5) nach dem vierten Zeitpunkt (t4) eine positive Zeitrichtung ist.

**Revendications**

1. Appareil (10) de traitement de données comprenant :

une unité de stockage (11) configurée pour stocker une pluralité de répliques (R0, R3), dans lequel chaque réplique comprend une plage entière (1, ..., N) de variables d'état (x01, ..., x0N ; x11, ..., x1N ; x21, ..., x2N ; x31, ..., x3N), les variables d'état indiquant 0 ou 1 incluses dans une fonction d'énergie ; et

une unité de traitement (12) configurée pour exécuter, en parallèle,

un premier traitement (P1) consistant à changer, pour la pluralité de répliques (R0,...,R3), une valeur d'une première variable d'état cible d'une pluralité de premières variables d'état qui appartiennent à une première plage d'indices (x01,...,x0m) sur la base d'une quantité de changement d'une valeur de la fonction d'énergie lorsque la pluralité de premières variables d'état sont des candidats de changement, la première plage d'indices étant l'une d'une pluralité de plages d'indices, la pluralité de plages d'indices correspondant à des groupes d'une pluralité de variables d'état en lesquels la plage entière de variables d'état est divisée de manière à ne pas se chevaucher, et

un deuxième traitement (P2) consistant à changer, pour la pluralité de répliques (R0,...,R3), une valeur d'une deuxième variable d'état cible d'une pluralité de deuxièmes variables d'état qui appartiennent à une deuxième plage d'indices (x1m+1,...,x1N) qui ne chevauche pas la première plage d'indices parmi la pluralité de variables d'état sur la base d'une quantité de changement d'une valeur de la fonction d'énergie lorsque la pluralité de deuxièmes variables d'état sont des candidats de changement, dans lequel

les répliques (R0, R1) de la pluralité de répliques qui sont exécutées au même moment dans le premier traitement et le deuxième traitement sont différentes les unes des autres, et

la variable d'état est une variable binaire qui prend une valeur de 0 ou de 1 et est exprimée en tant que bit,

le premier traitement (P1) inclut un premier étage du premier traitement (P1-1) et un deuxième étage du premier traitement (P1-2), et le deuxième traitement (P2) inclut un premier étage du deuxième traitement (P2-1) et un deuxième étage du deuxième traitement (P2-2),

dans lequel un deuxième étage est exécuté après un premier étage, et

dans lequel à un premier temps (t1), l'unité de traitement (12) traite une première réplique (R0) au niveau du premier étage du premier traitement (P1-1), et une deuxième réplique (R1) au niveau d'un deuxième étage du premier traitement (P1-2), et une troisième réplique (R2) au niveau du premier étage du deuxième traitement (P2-1), et une quatrième réplique (R3) au niveau d'un deuxième étage du deuxième traitement (P2-2),

à un deuxième temps (t2) l'unité de traitement (12) traite la quatrième réplique (R3) au niveau du premier étage du premier traitement (P1-1) et la première réplique (R0) au niveau du deuxième étage du premier traitement (P1-2), et traite la deuxième réplique (R1) au niveau du premier étage du deuxième traitement (P2-1) et la troisième réplique (R2) au niveau du deuxième étage du deuxième traitement (P2-2),

à un troisième temps (t3) l'unité de traitement (12) traite la troisième réplique (R2) au niveau du premier étage du premier traitement (P1-1) et la quatrième réplique (R3) au niveau du deuxième étage du premier traitement (P1-2), et traite la première réplique (R0) au niveau du premier étage du deuxième traitement (P2-1) et la deuxième réplique (R1) au niveau du deuxième étage du deuxième traitement (P2-2),

à un quatrième temps (t4) l'unité de traitement (12) traite la deuxième réplique (R1) au niveau du premier étage du premier traitement (P1-1) et la troisième réplique (R2) au niveau du deuxième étage du premier traitement (P1-2), et traite la quatrième réplique (R3) au niveau du premier étage du deuxième traitement (P2-1) et la première réplique (R0) au niveau du deuxième étage du deuxième traitement (P2-2), et

la direction allant du premier temps (t1) vers un temps (t5) après le quatrième temps (t4) est une direction de temps positive.

2. Programme de traitement de données comprenant des instructions qui, lorsque le programme est exécuté par au moins un ordinateur, amènent l'au moins un ordinateur à exécuter un traitement, le traitement comprenant

une exécution, en parallèle,

d'un premier traitement consistant à changer, pour une pluralité de répliques, dans lequel chaque réplique comprend une plage entière de variables d'état, les variables d'état indiquant 0 ou 1 incluses dans une fonction d'énergie, une valeur d'une première variable d'état cible d'une pluralité de premières variables d'état qui appartiennent à une première plage d'indices sur la base d'une quantité de changement d'une valeur de la fonction d'énergie lorsque la pluralité de premières variables d'état sont des candidats de changement, la première plage d'indices étant l'une d'une pluralité de plages d'indices, la pluralité de plages d'indices correspondant à des groupes d'une pluralité de variables d'état en lesquels la plage entière de variables d'état est divisée de manière à ne pas se chevaucher, et

d'un deuxième traitement consistant à changer, pour la pluralité de répliques, une valeur d'une deuxième variable d'état cible d'une pluralité de deuxièmes variables d'état qui appartiennent à une deuxième plage d'indices qui ne chevauche pas la première plage d'indices parmi la pluralité de variables d'état sur la base d'une quantité de changement d'une valeur de la fonction d'énergie lorsque la pluralité de deuxièmes variables d'état sont des candidats de changement, dans lequel

les répliques de la pluralité de répliques qui sont exécutées au même moment dans le premier traitement et le deuxième traitement sont différentes les unes des autres, et

la variable d'état est une variable binaire qui prend une valeur de 0 ou de 1 et est exprimée en tant que bit,

le premier traitement (P1) inclut un premier étage du premier traitement (P1-1) et un deuxième étage du premier traitement (P1-2) et le deuxième traitement (P2) inclut un premier étage du deuxième traitement (P2-1) et un deuxième étage du deuxième traitement (P2-2), dans lequel un deuxième étage est exécuté après un premier étage, et

dans lequel à un premier temps (t1), l'unité de traitement (12) traite une première réplique (R0) au niveau du premier étage du premier traitement (P1-1), et une deuxième réplique (R1) au niveau d'un deuxième étage du premier traitement (P1-2), et une troisième réplique (R2) au niveau du premier étage du deuxième traitement (P2-1), et une quatrième réplique (R3) au niveau d'un deuxième étage du deuxième traitement (P2-2),

à un deuxième temps (t2) l'unité de traitement (12) traite la quatrième réplique (R3) au niveau du premier étage du premier traitement (P1-1) et la première réplique (R0) au niveau du deuxième étage du premier traitement (P1-2), et traite la deuxième réplique (R1) au niveau du premier étage du deuxième traitement (P2-1) et la troisième réplique (R2) au niveau du deuxième étage du deuxième traitement (P2-2),

à un troisième temps (t3) l'unité de traitement (12) traite la troisième réplique (R2) au niveau du premier étage du premier traitement (P1-1) et la quatrième réplique (R3) au niveau du deuxième étage du premier traitement (P1-2), et traite la première réplique (R0) au niveau du premier étage du deuxième traitement (P2-1) et la deuxième réplique (R1) au niveau du deuxième étage du deuxième traitement (P2-2),

à un quatrième temps (t4) l'unité de traitement (12) traite la deuxième réplique (R1) au niveau du premier étage du premier traitement (P1-1) et la troisième réplique (R2) au niveau du deuxième étage du premier traitement (P1-2), et traite la quatrième réplique (R3) au niveau du premier étage du deuxième traitement (P2-1) et la première réplique (R0) au niveau du deuxième étage du deuxième traitement (P2-2), et

la direction allant du premier temps (t1) vers un temps (t5) après le quatrième temps (t4) est une direction de temps positive.

3.  Procédé de traitement de données mis en oeuvre par un ordinateur afin d'exécuter un processus comprenant :

une exécution, en parallèle,

d'un premier traitement consistant à changer, pour une pluralité de répliques, dans lequel chaque réplique comprend une plage entière de variables d'état, les variables d'état indiquant des variables d'état indiquant 0 ou 1 incluses dans une fonction d'énergie, une valeur d'une première variable d'état cible d'une pluralité de premières variables d'état qui appartiennent à une première plage d'indices sur la base d'une quantité de changement d'une valeur de la fonction d'énergie lorsque la pluralité de premières variables d'état sont des candidats de changement, la première plage d'indices étant l'une d'une pluralité de plages d'indices, la pluralité de plages d'indices correspondant à des groupes de la pluralité de variables d'état en lesquels la plage entière de variables d'état est divisée de manière à ne pas se chevaucher, et

d'un deuxième traitement consistant à changer, pour la pluralité de répliques, une valeur d'une deuxième variable d'état cible d'une pluralité de deuxièmes variables d'état qui appartiennent à une deuxième plage d'indices qui ne chevauche pas la première plage d'indices parmi la pluralité de variables d'état sur la base d'une quantité de changement d'une valeur de la fonction d'énergie lorsque la pluralité de deuxièmes variables d'état sont des candidats de changement, dans lequel

les répliques de la pluralité de répliques qui sont exécutées au même moment dans le premier traitement et le deuxième traitement sont différentes les unes des autres, et

la variable d'état est une variable binaire qui prend une valeur de 0 ou de 1 et est exprimée en tant que bit,

le premier traitement (P1) inclut un premier étage du premier traitement (P1-1) et un deuxième étage du premier traitement (P1-2) et le deuxième traitement (P2) inclut un premier étage du deuxième traitement (P2-1) et un deuxième étage du deuxième traitement (P2-2), dans lequel un deuxième étage est exécuté après un premier étage, et

dans lequel à un premier temps (t1), l'unité de traitement (12) traite une première réplique (R0) au niveau du premier étage du premier traitement (P1-1), et une deuxième réplique (R1) au niveau d'un deuxième étage du premier traitement (P1-2), et une troisième réplique (R2) au niveau du premier étage du deuxième traitement (P2-1), et une quatrième réplique (R3) au niveau d'un deuxième étage du deuxième traitement (P2-2),

à un deuxième temps (t2) l'unité de traitement (12) traite la quatrième réplique (R3) au niveau du premier étage du premier traitement (P1-1) et la première réplique (R0) au niveau du deuxième étage du premier traitement (P1-2), et traite la deuxième réplique (R1) au niveau du premier étage du deuxième traitement (P2-1) et la troisième réplique (R2) au niveau du deuxième étage du deuxième traitement (P2-2),

à un troisième temps (t3) l'unité de traitement (12) traite la troisième réplique (R2) au niveau du premier étage du premier traitement (P1-1) et la quatrième réplique (R3) au niveau du deuxième étage du premier traitement (P1-2), et traite la première réplique (R0) au niveau du premier étage du deuxième traitement (P2-1) et la deuxième réplique (R1) au niveau du deuxième étage du deuxième traitement (P2-2),

à un quatrième temps (t4) l'unité de traitement (12) traite la deuxième réplique (R1) au niveau du premier étage du premier traitement (P1-1) et la troisième réplique (R2) au niveau du deuxième étage du premier traitement (P1-2), et traite la quatrième réplique (R3) au niveau du premier étage du deuxième traitement (P2-1) et la première réplique (R0) au niveau du deuxième étage du deuxième traitement (P2-2), et

la direction allant du premier temps (t1) vers un temps (t5) après le quatrième temps (t4) est une direction de temps positive.

# FIG. 1

REPLICA

$R0=\{x0_1, x0_2, \ldots ,x0_N\}$

$R1=\{x1_1, x1_2, \ldots ,x1_N\}$

$R2=\{x2_1, x2_2, \ldots ,x2_N\}$

$R3=\{x3_1, x3_2, \ldots ,x3_N\}$

DATA PROCESSING APPARATUS — 10

STORAGE UNIT — 11

PROCESSING UNIT — 12

| | STAGE | STAGE |
|---|---|---|
| $x_1,\ldots,x_m$ ⟹ PROCESSING P1 | P1-1 | P1-2 |
| $x_{m+1},\ldots,x_N$ ⟹ PROCESSING P2 | P2-1 | P2-2 |

TIME t1

| P1 | R0 | R1 |
|---|---|---|
| P2 | R2 | R3 |

TIME t2

| P1 | R3 | R0 |
|---|---|---|
| P2 | R1 | R2 |

TIME t3

| P1 | R2 | R3 |
|---|---|---|
| P2 | R0 | R1 |

TIME t4

| P1 | R1 | R2 |
|---|---|---|
| P2 | R3 | R0 |

TIME t5

| P1 | R0 | R1 |
|---|---|---|
| P2 | R2 | R3 |

# FIG. 2

DATA PROCESSING APPARATUS 20

| CPU 21 | GPU 24 | 101 |
| RAM 22 | INPUT INTERFACE 25 | 102 |
| HDD 23 | MEDIUM READER 26 | 103 |
| | NIC 27 | NETWORK 104 |

ACCELERATOR CARD 28

FPGA 28a

MEMORY 28b

## FIG. 3

FIG. 4

# FIG. 5

_201_

**ΔE CALCULATION**

| G0 | **R0** | R1 | R2 | R3 | R4 | R5 | R6 | R7 | R8 | R9 | R10 | R11 | R12 | R13 | R14 | R15 | **R0** | R1 | R2 | R3 | R4 | R5 | |
|---|---|---|---|---|---|---|---|---|---|---|---|---|---|---|---|---|---|---|---|---|---|---|---|
| G1 | R12 | R13 | R14 | R15 | **R0** | R1 | R2 | R3 | R4 | R5 | R6 | R7 | R8 | R9 | R10 | R11 | R12 | R13 | R14 | R15 | **R0** | R1 | ... |
| G2 | R8 | R9 | R10 | R11 | R12 | R13 | R14 | R15 | **R0** | R1 | R2 | R3 | R4 | R5 | R6 | R7 | R8 | R9 | R10 | R11 | R12 | R13 | |
| G3 | R4 | R5 | R6 | R7 | R8 | R9 | R10 | R11 | R12 | R13 | R14 | R15 | **R0** | R1 | R2 | R3 | R4 | R5 | R6 | R7 | R8 | R9 | |

_202_

**Flip DETERMINATION**

| G0 | R0 | R1 | R2 | R3 | R4 | R5 | R6 | R7 | R8 | R9 | R10 | R11 | R12 | R13 | R14 | R15 | **R0** | R1 | R2 | R3 | R4 | |
|---|---|---|---|---|---|---|---|---|---|---|---|---|---|---|---|---|---|---|---|---|---|---|
| G1 | R12 | R13 | R14 | R15 | **R0** | R1 | R2 | R3 | R4 | R5 | R6 | R7 | R8 | R9 | R10 | R11 | R12 | R13 | R14 | R15 | **R0** | ... |
| G2 | R8 | R9 | R10 | R11 | R12 | R13 | R14 | R15 | **R0** | R1 | R2 | R3 | R4 | R5 | R6 | R7 | R8 | R9 | R10 | R11 | | |
| G3 | R4 | R5 | R6 | R7 | R8 | R9 | R10 | R11 | R12 | R13 | R14 | R15 | **R0** | R1 | R2 | R3 | R4 | R5 | R6 | R7 | R8 | |

_203a_    _203_

**W Read**

| G0 | **R0** | R1 | R2 | R3 | R4 | R5 | R6 | R7 | R8 | R9 | R10 | R11 | R12 | R13 | R14 | R15 | **R0** | R1 | R2 | R3 | |
|---|---|---|---|---|---|---|---|---|---|---|---|---|---|---|---|---|---|---|---|---|---|
| G1 | R12 | R13 | R14 | R15 | **R0** | R1 | R2 | R3 | R4 | R5 | R6 | R7 | R8 | R9 | R10 | R11 | R12 | R13 | R14 | R15 | ... |
| G2 | R8 | R9 | R10 | R11 | R12 | R13 | R14 | R15 | **R0** | R1 | R2 | R3 | R4 | R5 | R6 | R7 | R8 | R9 | R10 | R11 | |
| G3 | R4 | R5 | R6 | R7 | R8 | R9 | R10 | R11 | R12 | R13 | R14 | R15 | **R0** | R1 | R2 | R3 | R4 | R5 | R6 | R7 | |

_204_

**h UPDATE**

| G0 | **R0** | R1 | R2 | R3 | R4 | R5 | R6 | R7 | R8 | R9 | R10 | R11 | R12 | R13 | R14 | R15 | **R0** | R1 | R2 | |
|---|---|---|---|---|---|---|---|---|---|---|---|---|---|---|---|---|---|---|---|---|
| G1 | R12 | R13 | R14 | R15 | **R0** | R1 | R2 | R3 | R4 | R5 | R6 | R7 | R8 | R9 | R10 | R11 | R12 | R13 | R14 | ... |
| G2 | R8 | R9 | R10 | R11 | R12 | R13 | R14 | R15 | **R0** | R1 | R2 | R3 | R4 | R5 | R6 | R7 | R8 | R9 | R10 | |
| G3 | R4 | R5 | R6 | R7 | R8 | R9 | R10 | R11 | R12 | R13 | R14 | R15 | **R0** | R1 | R2 | R3 | R4 | R5 | R6 | |

TIME →

# FIG. 6

|  | G0 | G1 | G2 | G3 |  |
|---|---|---|---|---|---|
| WEIGHTING COEFFICIENTS CORRESPONDING TO UPDATE OF BITS ASSIGNED TO G0 | W0 (G0) | W1 (G0) | W2 (G0) | W3 (G0) | R0 |
| WEIGHTING COEFFICIENTS CORRESPONDING TO UPDATE OF BITS ASSIGNED TO G1 | W0 (G1) | W1 (G1) | W2 (G1) | W3 (G1) | R12 |
| WEIGHTING COEFFICIENTS CORRESPONDING TO UPDATE OF BITS ASSIGNED TO G2 | W0 (G2) | W1 (G2) | W2 (G2) | W3 (G2) | R8 |
| WEIGHTING COEFFICIENTS CORRESPONDING TO UPDATE OF BITS ASSIGNED TO G3 | W0 (G3) | W1 (G3) | W2 (G3) | W3 (G3) | R4 |

30   30a   30b   30c

## FIG. 7A

START

SET OPERATION PARAMETERS — S10

FROM S18 ──────────────────────→ S11

REPLICA LOOPi =0; i < M-1 ; i++

| S12 | S12a | S12b | S12c |
|---|---|---|---|
| CALCULATE ΔE FOR GROUP G0 OF REPLICA R(G0(i)) | CALCULATE ΔE FOR GROUP G1 OF REPLICA R(G1(i)) | CALCULATE ΔE FOR GROUP G2 OF REPLICA R(G2(i)) | CALCULATE ΔE FOR GROUP G3 OF REPLICA R(G3(i)) |

| S13 | S13a | S13b | S13c |
|---|---|---|---|
| MAKE FLIP DETERMINATION FOR GROUP G0 OF REPLICA R(G0(i)) | MAKE FLIP DETERMINATION FOR GROUP G1 OF REPLICA R(G1(i)) | MAKE FLIP DETERMINATION FOR GROUP G2 OF REPLICA R(G2(i)) | MAKE FLIP DETERMINATION FOR GROUP G3 OF REPLICA R(G3(i)) |

S14 — FLIP? NO / YES — S15
S14a — FLIP? NO / YES — S15a
S14b — FLIP? NO / YES — S15b
S14c — FLIP? NO / YES — S15c

| S15 | S15a | S15b | S15c |
|---|---|---|---|
| READ OUT WEIGHTING COEFFICIENTS FOR ALL GROUPS OF REPLICA R(G0(i)) | READ OUT WEIGHTING COEFFICIENTS FOR ALL GROUPS OF REPLICA R(G1(i)) | READ OUT WEIGHTING COEFFICIENTS FOR ALL GROUPS OF REPLICA R(G2(i)) | READ OUT WEIGHTING COEFFICIENTS FOR ALL GROUPS OF REPLICA R(G3(i)) |

TO S17  TO S16  TO S17  TO S16a  TO S17  TO S16b  TO S17  TO S16c

FIG. 7B

| FROM S15 | FROM S15a | FROM S15b | FROM S15c |
|---|---|---|---|
| S16 | S16a | S16b | S16c |
| PERFORM LF UPDATE FOR ALL GROUPS OF REPLICA R(G0(i)) | PERFORM LF UPDATE FOR ALL GROUPS OF REPLICA R(G1(i)) | PERFORM LF UPDATE FOR ALL GROUPS OF REPLICA R(G2(i)) | PERFORM LF UPDATE FOR ALL GROUPS OF REPLICA R(G3(i)) |

FROM S14 → FROM S14a → FROM S14b → FROM S14c →

REPLICA LOOP — S17

IS SEARCH ENDED? — S18

NO → TO S11

YES

END

# FIG. 8

211

|  | | | | | | | | | | | | | | | | | | | | | | | | |
|---|---|---|---|---|---|---|---|---|---|---|---|---|---|---|---|---|---|---|---|---|---|---|---|---|
| ΔE CALCULATION | G0 | **R0** | R1 | R2 | R3 | R4 | R5 | ≈ | R6 | ≈ | R7 | R8 | R9 | R10 | ≈ | R11 | R12 | R13 | R14 | R15 | ≈ | **R0** | R1 |
| | G1 | R12 | R13 | R14 | R15 | **R0** | R1 | ≈ | R2 | ≈ | R3 | R4 | R5 | R6 | ≈ | R7 | R8 | R9 | R10 | R11 | ≈ | R12 | R13 |
| | G2 | R8 | R9 | R10 | R11 | R12 | R13 | ≈ | R14 | ≈ | R15 | **R0** | R1 | R2 | ≈ | R3 | R4 | R5 | R6 | R7 | ≈ | R8 | R9 |
| | G3 | R4 | R5 | R6 | R7 | R8 | R9 | ≈ | R10 | ≈ | R11 | R12 | R13 | R14 | ≈ | R15 | **R0** | R1 | R2 | R3 | ≈ | R4 | R5 |

212

| Flip DETERMINATION | G0 | | R0 | R1 | R2 | R3 | R4 | R5 | ≈ | R6 | ≈ | R7 | R8 | R9 | R10 | ≈ | R11 | R12 | R13 | R14 | R15 | ≈ | **R0** |
|---|---|---|---|---|---|---|---|---|---|---|---|---|---|---|---|---|---|---|---|---|---|---|---|---|
| | G1 | | R12 | R13 | R14 | R15 | **R0** | R1 | ≈ | R2 | ≈ | R3 | R4 | R5 | R6 | ≈ | R7 | R8 | R9 | R10 | R11 | ≈ | R12 |
| | G2 | | R8 | R9 | R10 | R11 | R12 | R13 | ≈ | R14 | ≈ | R15 | **R0** | R1 | R2 | ≈ | R3 | R4 | R5 | R6 | R7 | ≈ | R8 |
| | G3 | | R4 | R5 | R6 | R7 | R8 | R9 | ≈ | R10 | ≈ | R11 | R12 | R13 | R14 | ≈ | R15 | **R0** | R1 | R2 | R3 | ≈ | R4 |

213a    213

| W Read | G0 | **R0** | R1 | → | R2 | ≈ | R3 | R4 | R5 | R6 | ≈ | R7 | R8 | R9 | R10 | R11 | → | R12 | R13 | R14 | ≈ |
|---|---|---|---|---|---|---|---|---|---|---|---|---|---|---|---|---|---|---|---|---|---|
| | G1 | R12 | R13 | ≈ | R14 | → | R15 | **R0** | R1 | R2 | ≈ | R3 | R4 | R5 | R6 | R7 | ≈ | R8 | R9 | R10 | ≈ |
| | G2 | R8 | R9 | → | R10 | ≈ | R11 | R12 | R13 | R14 | → | R15 | **R0** | R1 | R2 | R3 | ≈ | R4 | R5 | R6 | → |
| | G3 | R4 | R5 | ≈ | R6 | ≈ | R7 | R8 | R11 | R12 | ≈ | R11 | R12 | R13 | R14 | R15 | ≈ | **R0** | R1 | R2 | → |

214

| h UPDATE | G0 | **R0** | R1 | → | R2 | ≈ | R3 | R4 | R5 | R6 | ≈ | R7 | R8 | R9 | R10 | R11 | → | R12 | R13 | R14 |
|---|---|---|---|---|---|---|---|---|---|---|---|---|---|---|---|---|---|---|---|---|---|
| | G1 | R12 | R13 | ≈ | R14 | → | R15 | **R0** | R1 | R2 | ≈ | R3 | R4 | R5 | R6 | R7 | ≈ | R8 | R9 | R10 |
| | G2 | R8 | R9 | → | R10 | → | R11 | R12 | R13 | R14 | → | R15 | **R0** | R1 | R2 | R3 | ≈ | R4 | R5 | R6 |
| | G3 | R4 | R5 | ≈ | R6 | ≈ | R7 | R8 | R11 | R12 | ≈ | R11 | R12 | R13 | R14 | R15 | ≈ | **R0** | R1 | R2 |

TIME →

# FIG. 9

C1

1024

| W00 | W01 | W02 | W03 |
|-----|-----|-----|-----|
| W10 | W11 | W12 | W13 |
| W20 | W21 | W22 | W23 |
| W30 | W31 | W32 | W33 |

1024

G0   G1   G2   G3

C1a

256

| W00 |
|-----|
| W10 |
| W20 |
| W30 |

1024

G0

2Bytes  1Byte

256 Words
256 Words
256 Words
256 Words

41
42
43
44

8K Words

ADDRESS STORAGE MEMORY

32Bytes

WEIGHTING COEFFICIENT STORAGE MEMORY UNIT

50

# FIG. 10

| | 2 BYTES : THE NUMBER OF NON-ZERO COEFFICIENTS INCLUDED IN ONE ROW (0 - 256) |
|---|---|
| | 1 BYTES : POSITION INDEX INDICATING POSITION OF COEFFICIENT (0 - 255) |
| | 2 BYTES : COEFFICIENT VALUE |

PHYSICAL MEMORY NUMBER · LINE NUMBER · 50

| | | |
|---|---|---|
| 0 | L0 | |
| 1 | L1 | |
| 2 | | |
| 3 | L2 | |
| 4 | | |
| 5 | L3 | |
| 6 | | |
| 7 | | |
| 8 | L4 | |
| 9 | L5 | |
| 10 | | |
| 11 | L6 | |
| 12 | | |
| 13 | L7 | |
| 14 | | |
| 15 | L8 | |
| 16 | L9 | |
| 17 | | |
| 18 | | |
| 19 | L10 | ... |
| 20 | | |
| 21 | L11 | |
| 22 | | |
| 23 | | |
| 24 | L12 | |
| 25 | L13 | |
| 26 | | |
| 27 | L14 | |
| 28 | | |
| 29 | L15 | |
| 30 | | |
| 31 | | |
| 0 | L16 | |
| 1 | | |
| 2 | L17 | |

FIG. 11

**EP 4 148 628 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017219948 A
- JP 2021005282 A
- US 2021049475 A1
- US 2021150356 A1
- US 2007079076 A1
- US 2021256090 A1